# EUROPEAN PATENT APPLICATION

(11) **EP 4 550 882 A1**
(43) Date of publication of application: **07.05.2025**
(21) Application number: 24206856.7
(22) Date of filing: 16.10.2024
(51) Int. Cl.: H04W 36/00, H04W 12/06, H04W 12/08, H04W 36/08, H04W 36/36, H04W 48/20, H04W 84/12

(54) **ELECTRONIC APPARATUS, CONTROL METHOD THEREOF, PROGRAM, AND COMPUTER-READABLE STORAGE MEDIUM STORING A PROGRAM**

(30) Priority: 06.11.2023 JP 2023189528
(71) Applicant: CANON KABUSHIKI KAISHA, Tokyo 146-8501 (JP)
(72) Inventor: SUGAWARA, Wahei, Tokyo, 146-8501 (JP)
(74) Representative: TBK

(57) **Abstract**

An electronic apparatus (100), including: a connection means configured to connect to a first access point (AP) based on a first security mode; a changing means configured to change an AP serving as a connection destination based on a change request of an AP serving as a connection destination, the change request being received from an AP that is currently connected; and a control means configured to perform control to suppress a situation where an AP, among candidate APs serving as candidates to be changed to by the changing means, that uses a security mode having a weaker security strength than the first security mode, is connected due to a change in the AP serving as a connection destination made by the changing means.

## Description

### BACKGROUND OF THE INVENTION

### Field of the Invention

The present invention relates to an electronic apparatus capable of changing an access point (AP) serving as a connection destination based on a request to change the connection destination received from an AP, a control method thereof, a program, and a computer-readable storage medium storing a program.

### Description of the Related Art

There is a technique, in an Extended Service Set (ESS) constituted by a plurality of access points (APs), for dynamically switching the connection destination AP such that the APs and a station (STA) can exchange data efficiently. When it is determined that the connection destination AP should be switched based on the congestion of the APs to which the STA is connected, the availability of other APs, radio wave conditions, and the like, the AP that is currently connected sends a connected AP change request to the STA. Upon receiving an AP change request, the STA can connect to the appropriate AP by switching the connection destination AP in accordance with the request.

Japanese Patent Laid-Open No. 2021-175068 discloses the following as processing for a router having AP functionality to make a request, to a wireless child device that is currently connected, to change the connection destination. A mobile router (MR1) that can connect to a plurality of wireless child devices confirms whether the wireless child device terminals support IEEE 802.11v. Whether a wireless child device terminal supports IEEE 802.11v can be determined from an Association Request frame sent when the wireless child device terminal connects to the MR1 wirelessly. If the wireless child device terminal supports IEEE 802.11v, a BSS Transition Management (BTM) Request frame is sent to the corresponding wireless child device terminal. ABSS Transition Candidate List Entries field of the BTM Request frame specifies a BSSID of a parent router RT2 as the connection destination. This prompts the child device terminal to switch the connection destination, and the wireless child device terminal switches the connection destination from the MR1 to the RT2 in accordance with the received BTM Request frame.

### SUMMARY OF THE INVENTION

The present invention provides an electronic apparatus capable of performing more suitable control in response to a request to change a connection destination received from an AP, a control method thereof, a program, and a computer-readable storage medium storing a program.

The present invention in its first aspect provides an electronic apparatus as specified in claims 1 to 19.

The present invention in its second aspect provides a method for controlling an electronic apparatus as specified in claim 20.

The present invention in its third aspect provides a program as specified in claim 21.

The present invention in its fourth aspect provides a computer-readable storage medium storing a program as specified in claim 22.

According to the present invention, more suitable control can be performed in response to a request to change a connection destination received from an AP.

Further features of the present invention will become apparent from the following description of exemplary embodiments with reference to the attached drawings.

### BRIEF DESCRIPTION OF THE DRAWINGS

FIG. 1 is a diagram illustrating an example of the configuration of a system.
FIGS. 2A and 2B are diagrams illustrating an example of the configuration of an MFP.
FIGS. 3A, 3B, 3C, and 3D are diagrams illustrating an example of displays made in a console unit of the MFP.
FIGS. 4A and 4B are diagrams illustrating the configuration of a mobile terminal device.
FIG. 5 is a diagram illustrating the configuration of an access point.
FIG. 6 is a sequence chart illustrating processing based on a request to change a connection destination.
FIG. 7 is a flowchart illustrating an example of processing performed in response to a measurement request, a change request, and the like.
FIG. 8 is a flowchart illustrating an example of processing for storing a security mode.
FIG. 9 is a flowchart illustrating an example of processing for a determination based on a security mode.
FIG. 10 is a diagram illustrating an example of a screen for setting security mode restrictions.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

Incidentally, an AP that is a candidate for a connection destination switch in a connection destination AP change request from an AP may include an AP that is not preferred as a connection destination for an STA. It is therefore necessary to devise a way to switch the STA to an appropriate AP.

### System Configuration

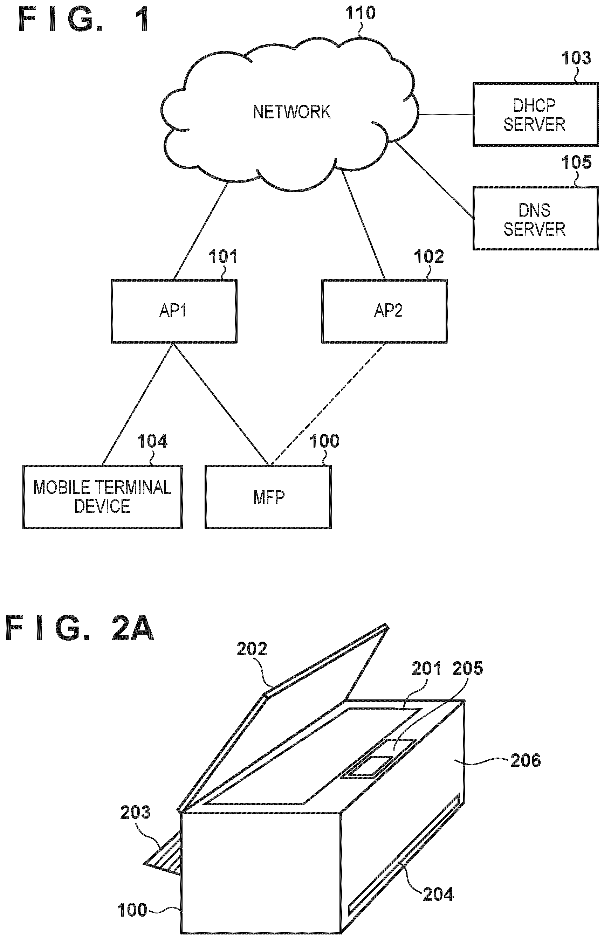

FIG. 1 illustrates an example of the configuration of a system according to the present embodiment. In one example, this system is a wireless communication system in which a plurality of communication devices can communicate with each other wirelessly. In the example illustrated in FIG. 1, a mobile terminal device 104 and an MFP 100 serving as communication devices, an AP 101 and an AP 102 which are access points, a DHCP server 103, a DNS server 105, and a network 110 are provided. Note that the AP 101 and the AP 102 may be referred to as "AP 1" and "AP 2", respectively. The mobile terminal device 104 is a device having a wireless communication function that uses wireless LAN or the like. "Wireless LAN" may be called "WLAN" hereinafter. The mobile terminal device 104 may be a personal information terminal such as a Personal Digital Assistant (PDA), a mobile phone (a smartphone), a digital camera, a personal computer, or the like.

The MFP 100 is a type of electronic apparatus, and is a type of information processing device. The MFP 100 is also a printing device having a printing function, and may further have a reading function (a scanner), a fax function, a telephone function, and the like. The MFP 100 according to the present embodiment also has a communication function that enables wireless communication with the mobile terminal device 104. Although the present embodiment describes a case where the MFP 100 is used as an example, the configuration is not limited thereto. For example, a scanner device, a projector, a mobile terminal, a smartphone, a laptop PC, a tablet terminal, a PDA, a digital camera, a music playback device, a television, a smart speaker, or the like, which has a communication function, may be used instead of the MFP 100. Note that "MFP" is an acronym for "Multi Function Peripheral".

The AP 101 is provided separate from (outside) the mobile terminal device 104 and the MFP 100, and functions as a WLAN base station device. A communication device having a WLAN communication function can communicate in WLAN infrastructure mode via the AP 101. Note that access points may be called "APs" hereinafter. Infrastructure mode may also be called "wireless infrastructure mode". The AP 101 communicates wirelessly with a communication device that has permitted (authenticated) a connection to itself, and relays wireless communication between that communication device and other communication devices. The AP 101 can, for example, be connected to a wired communication network, and can relay communication between a communication device connected to that wired communication network and another communication device wirelessly connected to the AP 101.

The AP 102 has the same functions as the AP 101, and the MFP 100 switches its connection from the AP 101 to the AP 102 as necessary. The DHCP server 103 connects to the MFP 100 via the AP 101 and the network 110, and provides services to the MFP 100 by responding to requests from the MFP 100. Although FIG. 1 illustrates a configuration in which the DHCP server 103 is connected as a device separate from the AP 101 and the AP 102, the configuration may be such that the AP 101 and the AP 102 have DHCP server functionality. The DNS server 105 is connected to the MFP 100, the mobile terminal device 104, and the like via the AP 101 and the network 110, and provides services for name resolution by responding to requests from the MFP 100, the mobile terminal device 104, and the like. Here, the network 110 may the Internet, or may be a private network in a business, a mobile phone network, or the like.

### External Configuration of MFP

FIG. 2A illustrates an example of the external configuration of the MFP 100. The MFP 100 includes a document platform 201, a document cover 202, a printing paper insertion port 203, a printing paper discharge port 204, and a console unit 205, for example. The document platform 201 is a platform for placing a document to be read. The document cover 202 is a cover for securing a document placed on the document platform 201, and for ensuring that light from a light source that illuminates the document does not escape to the exterior when the document is being read. The printing paper insertion port 203 is an insertion port in which various sizes of paper can be set. The printing paper discharge port 204 is a discharge port for discharging paper which has been printed onto. Paper set in the printing paper insertion port 203 is conveyed one sheet at a time to a printing unit, where the paper is printed onto and then discharged from the printing paper discharge port 204. The console unit 205 is configured including keys such as text input keys, a cursor key, an OK key, a cancel key, and the like, as well as LEDs, an LCD, and the like, and is configured such that a user can launch the various functions of the MFP, manipulate various settings, and the like. The console unit 205 may also be configured including a touch panel display. The MFP 100 has a WLAN wireless communication function and therefore is configured also including a wireless communication antenna 206 for that wireless communication, although the antenna 206 is not necessarily visible from the exterior. Like the mobile terminal device 104, the MFP 100 can communicate wirelessly over the WLAN in frequency bands such as the 2.4 GHz band, the 5 GHz band, or the like.

### MFP Configuration

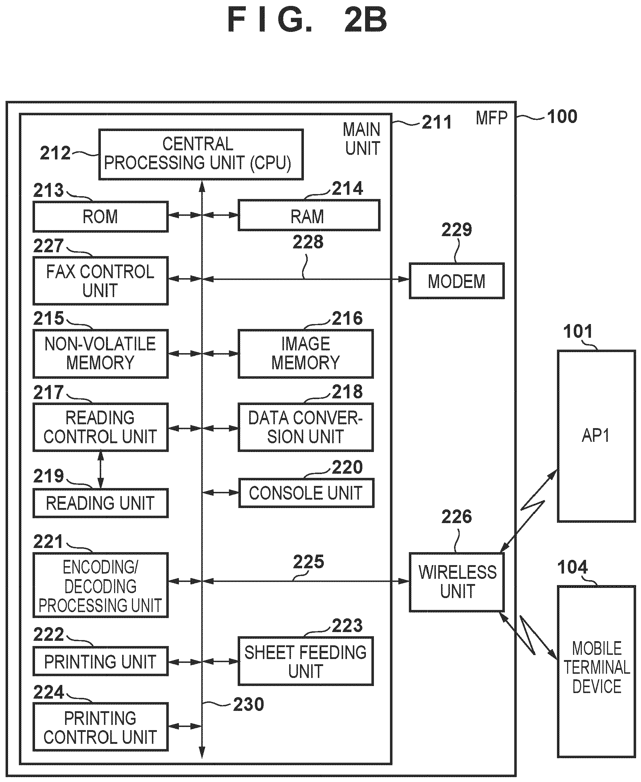

FIG. 2B illustrates an example of the configuration of the MFP 100. The MFP 100 is configured including a main unit 211 that performs main control of the device itself, and a wireless unit 226, which is a single communication module that performs WLAN communication using at least one common antenna. The MFP 100 is also configured including a modem 229 for wired communication, for example. The main unit 211 is simply a unit including function blocks other than the wireless unit 226 and the modem 229. The main unit 211 is configured including, for example, a CPU 212 (a central processing unit), a ROM 213, a RAM 214, a non-volatile memory 215, an image memory 216, a reading control unit 217, a data conversion unit 218, a reading unit 219, and an encoding/decoding processing unit 221. The main unit 211 also includes, for example, a printing unit 222, a sheet feeding unit 223, a printing control unit 224, and a console unit 220. The function units in the main unit 211 are connected to each other by a system bus 230 managed by the CPU 212. Additionally, the main unit 211 and the wireless unit 226 are connected by a dedicated bus 225, for example, and the main unit 211 and the modem 229 are connected by a bus 228, for example.

The CPU 212 is a system control unit including at least one processor, and controls the MFP 100 as a whole. The processing by the MFP 100 described below is implemented by the CPU 212 executing programs stored in the ROM 213, for example. Note that dedicated hardware for each process may be provided. The ROM 213 stores control programs executed by the CPU 212, embedded OS programs, and the like. In the present embodiment, the CPU 212 performs software control such as scheduling, task switching, and the like by executing each control program stored in the ROM 213 under the management of an embedded OS, which is also stored in the ROM 213.

The RAM 214 is constituted by an SRAM or the like. The RAM 214 stores data such as program control variables, data such as setting values registered by the user and management data of the MFP 100, and the like. In addition, the RAM 214 can be used as various types of working buffers. The non-volatile memory 215 is constituted by a memory such as a flash memory, for example, and continues to store data even when the MFP 100 is turned off. The image memory 216 is constituted by a memory such as a DRAM. The image memory 216 stores image data received through the wireless unit 226, image data processed by the encoding/decoding processing unit 221, and the like. Note that the memory configuration of the MFP 100 is not limited to the configuration described above. The data conversion unit 218 analyzes data in various formats, converts image data into printing data, and the like.

The reading control unit 217 controls the reading unit 219 (e.g., a contact-type image sensor (CIS)) to optically read a document placed on the document platform 201. The reading control unit 217 converts an image obtained by optically reading the document into electrical image data (an image signal) and outputs the image data. At this time, the reading control unit 217 may perform various types of image processing, such as binarization, half-tone processing, and the like before outputting the image data.

The console unit 220 is the console unit 205 described with reference to FIG. 2A, and displays items in a display under display control by the CPU 212, generates signals in response to accepting user operations, and the like.

The encoding/decoding processing unit 221 performs encoding processing, decoding processing, scaling processing, and the like on image data handled by the MFP 100 (JPEG, PNG, and the like).

The sheet feeding unit 223 holds sheets for printing. The sheet feeding unit 223 can supply sheets set therein under the control of the printing control unit 224. The sheet feeding unit 223 may include a plurality of sheet feeding units to hold a plurality of types of sheets in a single apparatus, and from which sheet feeding unit sheets are fed can be controlled under the control of the printing control unit 224.

The printing control unit 224 applies various types of image processing, such as smoothing processing, print darkness correction processing, color correction, and the like, to the image data to be printed, and outputs the processed image data to the printing unit 222. The printing unit 222 is configured to be capable of executing inkjet printing processing, for example, so that ink supplied from an ink tank is ejected from a print head and an image is recorded on a recording medium such as paper. Note that the printing unit 222 may be configured to be capable of executing other types of printing processing, such as electrophotographic printing. The printing control unit 224 can also periodically read out information on the printing unit 222 and update status information and the like stored in the RAM 214, including the remaining amount in the ink tank, the state of the print head, and the like.

The wireless unit 226 is a unit capable of providing a WLAN communication function, and is capable of providing functions equivalent to a combination with a WLAN unit 401 of the mobile terminal device 104, for example. In other words, according to the WLAN standard, the wireless unit 226 converts data into packets and sends the packets to other devices, and also restores packets from other external devices into the original data thereof and outputs the data to the CPU 212. The wireless unit 226 is capable of communicating as a station compliant with the IEEE 802.11 standard series. The wireless unit 226 is particularly capable of communicating as a station compliant with IEEE 802.11a/b/g/n/ac/ax. "Station" may be called "STA" hereinafter. The wireless unit 226 is also capable of communicating as a STA that supports Wi-Fi Agile Multiband (registered trademark).

The wireless unit 226 supports IEEE 802.11ax, i.e., Wi-Fi 6 (registered trademark), and is capable of processing compliant with IEEE 802.11ax. In other words, the MFP 100 is capable of either or both of processing as a STA that supports (is compliant with) OFDMA, and operations (processing) as a STA that supports (is compliant with) TWT. "OFDMA" is an acronym for "Orthogonal Frequency-Division Multiple Access". "TWT" is an acronym for "Target Wake Time". Supporting TWT means that the timing of data communication from a parent device to the STA is adjusted. The wireless unit 226 (the MFP 100) serving as the STA shifts the communication function to a sleep state when there is no need to stand by for signal reception. This makes it possible to suppress power consumption. The wireless unit 226 also supports Wi-Fi 6E (registered trademark). In other words, the wireless unit 226 is also capable of communicating in the 6 GHz band (5.925 GHz to 7.125 GHz). Unlike the 5 GHz band, the 6 GHz band does not have a band in which Dynamic Frequency Selection (DFS) is performed. As such, in communication in the 6 GHz band, communication will not be cut off due to DFS standby time, which can be expected to improve the communication.

Note that the mobile terminal device 104 and the MFP 100 are capable of P2P (WLAN) communication based on WFD, and the wireless unit 226 has a software access point (software AP) function or a group owner function. In other words, the wireless unit 226 is capable of constructing P2P communication networks, setting channels to use in P2P communication, and the like.

### MFP Console Unit

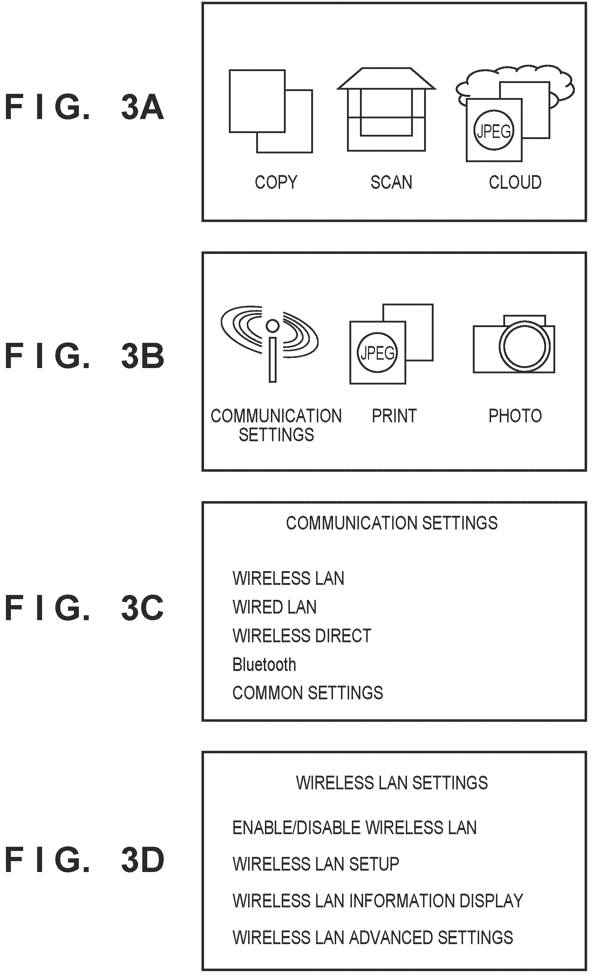

FIGS. 3A to 3D schematically illustrate examples of screens displayed in a display (a touchscreen) included in the console unit 220 of the MFP 100. FIG. 3A illustrates an example of a home screen displayed when the MFP 100 is turned on and operations such as printing, scanning, or the like are not underway (an "idle state" or a "standby state"). In FIG. 3A, display items indicating "Copy", "Scan", and "Cloud" (menu items) are displayed. "Cloud" is a menu item related to a cloud function that uses Internet communication. Settings in the MFP 100 can be made, the execution of functions can be started, and the like by operating keys, the touch panel, or the like to select one of the menu items. The MFP 100 can seamlessly display a screen different from that illustrated in FIG. 3A by accepting an operation of a key, the touch panel, or the like in the home screen illustrated in FIG. 3A.

FIG. 3B is an example of the display of another part of the home screen, and is a screen transitioned to in response to an operation for displaying another page of the home screen (an operation for sliding to the left or the right) being made in the state illustrated in FIG. 3A. In FIG. 3B, display items (menu items) indicating "Communication Settings", "Print", and "Photo" are displayed. When one of these menu items is selected, the function corresponding to the selected menu item, i.e., one of the printing function, the photo function, and the communication settings, is executed.

FIG. 3C is an example of the display of a menu screen for the communication settings, displayed when "Communication Settings" has been selected in the screen illustrated in FIG. 3B. "Wireless LAN", "Wired LAN", "Wireless Direct", "Bluetooth", and "Common" are displayed as menu items (options) in the communication settings menu screen. "Wireless LAN", "Wired LAN", and "Wireless Direct" are menu items for LAN settings, settings such as wired connection settings, settings for enabling and disabling a wireless infrastructure mode, settings for enabling and disabling a P2P mode such as WFD and software AP mode, and the like can be set using these items. When the "Wireless LAN" item is selected and the wireless LAN is enabled by a user operation, wireless infrastructure mode is enabled. When the "Wireless Direct" item is selected and wireless direct is enabled by a user operation, the P2P (WLAN) mode is enabled. A common settings menu for each connection format is also displayed in this screen. Furthermore, the user can set the frequency band, frequency channel, and the like of the wireless LAN from this screen.

FIG. 3D is an example of the display of a menu screen for the wireless LAN settings, displayed when "Wireless LAN" has been selected in the screen illustrated in FIG. 3C. "Enable/Disable Wireless LAN", "Wireless LAN Setup", "Wireless LAN Information Display", and "Wireless LAN Advanced Settings" are displayed as menu items (options) in the wireless LAN settings menu screen. Settings such as enabling/disabling wireless infrastructure mode, wireless LAN setup, displaying wireless LAN information, wireless LAN advanced settings, and the like can be made using these items. These items are displayed as an interface capable of accepting selection instructions made by the user.

### External Configuration of Mobile Terminal Device

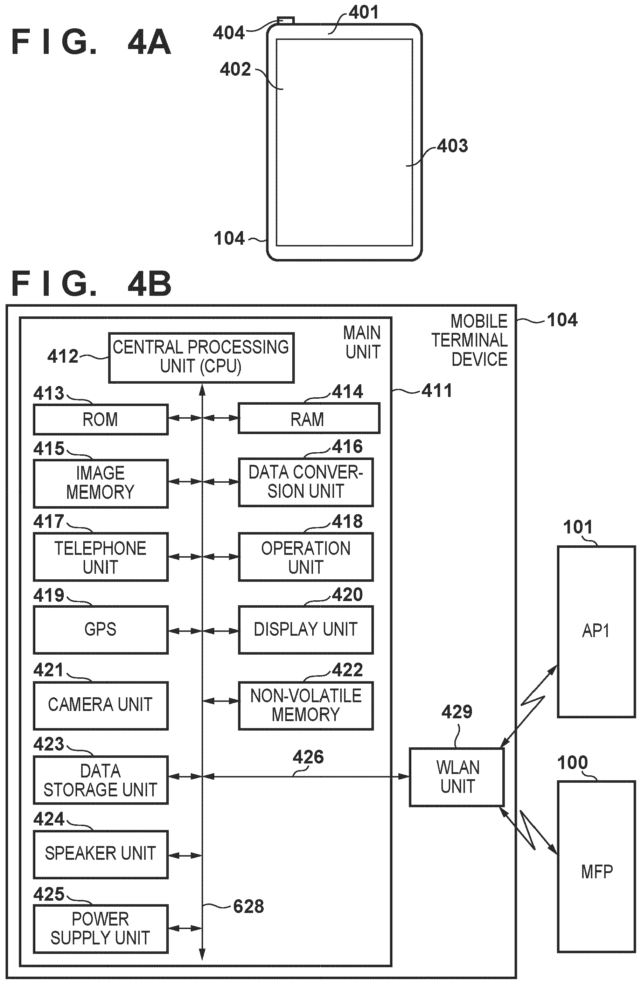

FIG. 4A is a diagram illustrating an example of the external configuration of the mobile terminal device 104. The present embodiment will describe a case where the mobile terminal device 104 is a typical smartphone, for example. Note that the mobile terminal device 104 is configured including a display unit 402, an operation unit 403, and a power key 404, for example. The display unit 402 is a display having a Liquid Crystal Display (LCD)-based display mechanism, for example. Note that the display unit 402 may display information using a Light Emitting Diode (LED) or the like, for example. The mobile terminal device 104 may also have a function for outputting information by audio in addition to or instead of the display unit 402. The operation unit 403 is configured including physical keys such as keys, buttons, and the like, a touch panel, and the like for detecting user operations. Note that in this example, the information display in the display unit 402 and the acceptance of user operations by the operation unit 403 are performed using a common touch panel display, and thus the display unit 402 and the operation unit 403 are implemented as a single device. In this case, for example, button icons or a software keyboard are displayed using a display function of the display unit 402, and the user touching those locations is detected using an operation reception function of the operation unit 403. Note that the display unit 402 and the operation unit 403 may be separate, and the hardware for display and the hardware for accepting operations may be provided individually. The power key 404 is a physical key for accepting user operations for turning the mobile terminal device 104 on or off.

The mobile terminal device 104 includes the WLAN unit 401, which provides WLAN communication functionality, but is not necessarily visible from the exterior. The WLAN unit 401 is configured to be capable of data (packet) communication in a WLAN system compliant with the IEEE 802.11 standard series (IEEE 802.11a/b/g/n/ac/ax and the like), for example. The WLAN unit 401 is also capable of communicating as an AP that supports Wi-Fi Agile Multiband (registered trademark). However, the configuration is not limited thereto, and the WLAN unit 401 may be capable of communication in a WLAN system compliant with another standard. This example assumes that the WLAN unit 401 is capable of communicating in both the 2.4 GHz band and the 5 GHz frequency bands. The WLAN unit 401 is also assumed to be capable of communication based on WFD, communication using the software AP mode, communication using the wireless infrastructure mode, and the like. Operations performed in these modes will be described later.

### Configuration of Mobile Terminal Device

FIG. 4B illustrates an example of the configuration of the mobile terminal device 104. The mobile terminal device 104 includes a main unit 411 that performs main control of the device itself, and a WLAN unit 429 that performs WLAN communication, for example. The main unit 411 is simply a unit including function blocks other than the WLAN unit 429. The main unit 411 includes, for example, a CPU 412, a ROM 413, a RAM 414, an image memory 415, a data conversion unit 416, a telephone unit 417, a GPS 419, a camera unit 421, a non-volatile memory 422, a data storage unit 423, a speaker unit 424, and a power supply unit 425. Here, CPU is an acronym of "Central Processing Unit", ROM is an acronym of "Read Only Memory", RAM is an acronym of "Random Access Memory", and GPS is an acronym of "Global Positioning System". The mobile terminal device 104 also includes a display unit 420 and an operation unit 418. The function units in the main unit 411 are connected to each other by a system bus 628 managed by the CPU 412. Additionally, the main unit 411 and the WLAN unit 429 (the aforementioned WLAN unit 401) are connected, for example, by a dedicated bus 426.

The CPU 412 is a system control unit including at least one processor, and controls the mobile terminal device 104 as a whole. The processing by the mobile terminal device 104 described below is implemented by the CPU 412 executing programs stored in the ROM 413, for example. Note that dedicated hardware for each process may be provided. The ROM 413 stores control programs executed by the CPU 412, embedded operating system (OS) programs, and the like. In the present embodiment, the CPU 412 performs software control such as scheduling, task switching, and the like by executing each control program stored in the ROM 413 under the management of an embedded OS, which is also stored in the ROM 413.

The RAM 414 is constituted by a Static RAM (SRAM) or the like. The RAM 414 stores data such as program control variables, data such as setting values registered by the user and management data of the mobile terminal device 104, and the like. In addition, the RAM 414 can be used as various types of working buffers. The image memory 415 is constituted by a memory such as a Dynamic RAM (DRAM) or the like. The image memory 415 temporarily stores image data received through the WLAN unit 429, image data read out from the data storage unit 423, and the like for processing by the CPU 412. The non-volatile memory 422 is constituted by a memory such as a flash memory, for example, and continues to store data even when the mobile terminal device 104 is turned off. Note that the memory configuration of the mobile terminal device 104 is not limited to the configuration described above. For example, the image memory 415 and the RAM 414 may be implemented by the same memory, data may be backed up using the data storage unit 423, or the like. Additionally, although the present embodiment describes a DRAM as an example of the image memory 415, another storage medium such as a hard disk, a non-volatile memory, or the like may be used instead.

The data conversion unit 416 analyzes data in various formats, performs data conversion such as color conversion and image conversion, and the like. The telephone unit 417 controls a telephone line, and implements telephone communication by processing audio data input and output through the speaker unit 424. The GPS 419 receives radio waves transmitted from a satellite and obtains location information such as the current latitude, longitude, and the like of the mobile terminal device 104.

The camera unit 421 has a function for electronically recording and encoding an image input through a lens. The image data captured by the camera unit 421 is stored in the data storage unit 423. The speaker unit 424 performs control for implementing a function for inputting or outputting audio for the telephone function, other functions such as alarm notifications, and the like. The power supply unit 425 is a portable battery, for example, and control the supply of power to the interior of the device. Power states include, for example, a "battery depleted state" in which there is no power remaining in the battery, a "power off state" in which the power key 404 has not been pressed, an "operating state" in which the battery is running normally, and a "power-saving state" in which the battery is operating but is in a power saving state.

The display unit 420 is the display unit 402 described with reference to FIG. 4A, and displays various types of input operations, the operating state and status of the MFP 100, and the like under the control of the CPU 412. The operation unit 418 is the operation unit 403 described with reference to FIG. 4A, and when a user operation is accepted, performs control such as generating an electrical signal corresponding to the operation, outputting the electrical signal to the CPU 412, and the like.

The mobile terminal device 104 performs wireless communication using the WLAN unit 429, and performs data communication with other devices such as the MFP 100. The WLAN unit 429 converts data into packets and sends the packets to other devices. The WLAN unit 429 also restores packets from other external devices into the original data and outputs the data to the CPU 412. The WLAN unit 429 is a unit for implementing communication compliant with each WLAN standard. The WLAN unit 429 can operate in at least two communication modes simultaneously, including wireless infrastructure mode and P2P (WLAN) mode. Note that the frequency bands used in these communication modes can be limited by the functions and performance of the hardware.

### Configuration of Access Point

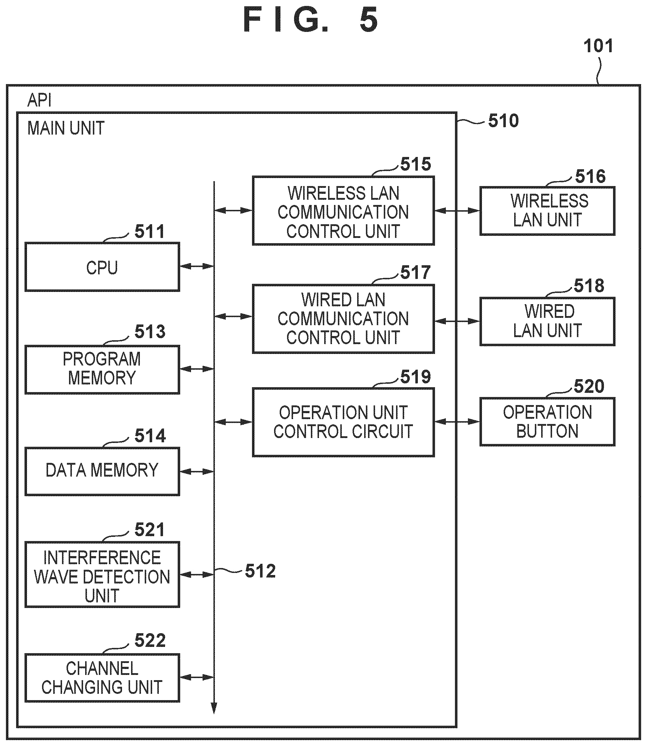

FIG. 5 is a block diagram illustrating the configuration of the AP 101 having a wireless LAN access point function. A main unit 510, which controls the AP 101, is configured including a wireless LAN unit 516, a wired LAN unit 518, and an operation button 520. The main unit 510 is simply a unit including function blocks other than the wireless LAN unit 516, the wired LAN unit 518, and the operation button 520.

A microprocessor-type CPU 511 disposed in the main unit 510 operates in accordance with a control program stored in a ROM-type program memory 513 and data in a RAM-type data memory 514, which are connected to the CPU 511 by an internal bus 512. The CPU 511 communicates with other communication terminal devices over a wireless LAN by controlling the wireless LAN unit 516 through a wireless LAN communication control unit 515. The CPU 511 also communicates with other communication terminal devices over a wired LAN by controlling the wired LAN unit 518 through a wired LAN communication control unit 517. The CPU 511 is capable of accepting operations made by a user manipulating the operation button 520, by controlling an operation unit control circuit 519. The CPU 511 includes at least one processor.

The AP 101 also includes an interference wave detection unit 521 and a channel changing unit 522. The interference wave detection unit 521 performs interference wave detection processing when communicating wirelessly in a band in which Dynamic Frequency Selection (DFS) is implemented. When communicating wirelessly in a band in which DFS is implemented, the channel changing unit 522 performs processing for changing the channel used when interference waves are detected, when it is necessary to immediately change to a free channel, and the like.

Note that the AP 102 has the same configuration as the AP 101.

### P2P Communication Method

An overview of a P2P (WLAN) communication method for devices to wirelessly communicate directly with each other without traversing an external access point in WLAN communication will be given next. P2P (WLAN) communication can be implemented through a plurality of methods, e.g., the communication device can support a plurality of modes for P2P (WLAN) communication and selectively execute P2P communication (WLAN) using one of the plurality of modes.

The following two modes are assumed as P2P modes.
- Software AP Mode
- Wi-Fi Direct (WFD) Mode

A communication device capable of P2P communication can be configured to support at least one of these modes. However, even a communication device capable of P2P communication does not have to support all of these modes, and may be configured to support only some.

In a communication device having a WFD communication function (e.g., the mobile terminal device 104), an application for implementing the communication function (in some cases, a dedicated application) is called in response to a user operation being accepted through the operation unit of the device. The communication device can then display a screen of a user interface (UI) provided by the application to prompt the user to perform an operation, and then perform WFD communication based on the user operation accepted in response thereto.

### • Software AP Mode

In the software AP mode, the communication device (e.g., the mobile terminal device 104) operates in the role of a client requesting various types of services. The other communication device (e.g., the MFP 100) operates as a software AP capable of performing WLAN AP functions through software settings. Note that commands, parameters, and the like sent and received when establishing a wireless connection between the client and the software AP may be any specified by the Wi-Fi (registered trademark) standard, and will therefore not be described. The MFP 100 operating in software AP mode also determines a frequency band and a frequency channel as a parent station. Accordingly, the MFP 100 can select which frequency band to use from 5 GHz and 2.4 GHz, as well as which frequency channel to use in that frequency band.

### • WFD Mode

The MFP 100 may be started so as to be fixed as the parent station for the WFD mode (Autonomous Group Owner). In this case, GO Negotiation processing for determining the role is unnecessary. Furthermore, in this case, the MFP 100 also determines the frequency band and the frequency channel to be used as the parent station. Accordingly, the MFP 100 can select which frequency band to use from 5 GHz and 2.4 GHz, as well as which frequency channel to use in that frequency band.

### Wireless Infrastructure Mode

In wireless infrastructure mode, communication devices that communicate with each other (e.g., the mobile terminal device 104 and the MFP 100) are connected to an external AP that manages the network (e.g., the AP 101), and the communication devices communicate with each other through the AP. In other words, communication between the communication devices is executed over a network constructed by an external AP. The mobile terminal device 104 and the MFP 100 both discover the AP 101, and by sending a connection request and connecting to the AP 101, those communication devices can communicate in wireless infrastructure mode via the AP 101. Note that a plurality of communication devices may be connected to individual separate APs. In this case, the communication devices can communicate by data being transferred among the APs. The commands, parameters, and the like sent and received during communication between the communication devices via the access points may be any specified by the Wi-Fi standard, and will therefore not be described. In this case, the AP 101 also determines the frequency band and the frequency channel. Accordingly, the AP 101 can select which frequency band to use from 5 GHz or 2.4 GHz and 6 GHz, as well as which frequency channel to use in that frequency band.

### Processing in Response to Request to Change Connection Destination to STA from AP

The mobile terminal device 104 and the MFP 100 support functions disclosed as Wi-Fi Agile Multiband (registered trademark). Wi-Fi Agile Multiband is a function that enables the selection of an optimal environment in response to changing conditions of a Wi-Fi network. To be more specific, a STA such as the mobile terminal device 104 and the MFP 100, and an AP such as the AP 101, exchange information about the network environment using an IEEE 802.11 series communication standard. By exchanging information in this manner, when the network is congested, the AP can guide the STA (change the connection destination) to another AP, a frequency band, a channel, or even another cellular service.

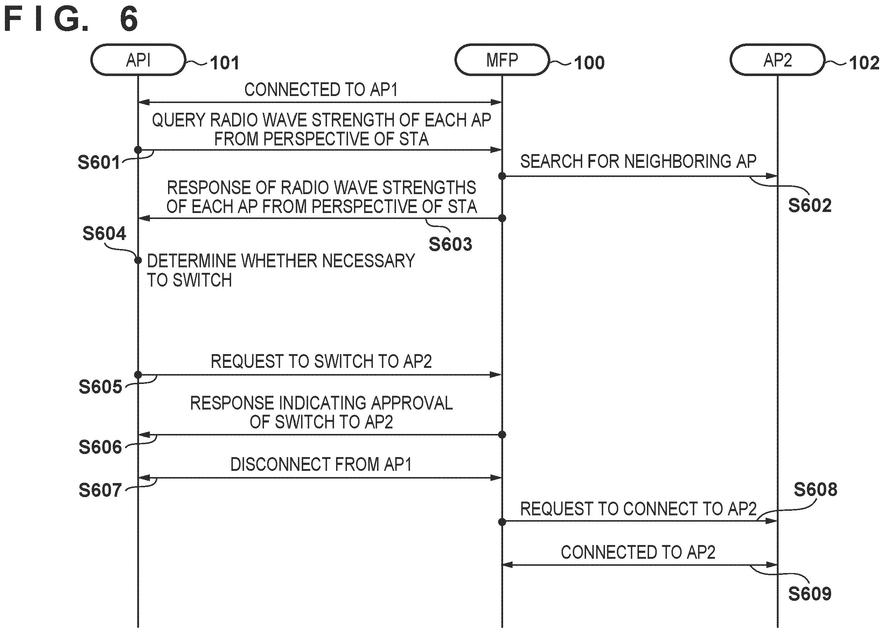

FIG. 6 is a sequence chart illustrating a case where the MFP 100 switches the connection destination AP from the AP 101 to the AP 102 in accordance with a connection destination change request (a change request of an access point serving as a connection destination) from the AP 101. Processing executed by each device in this sequence is implemented by the CPU of each device reading out various programs stored in a memory provided in that device, such as a ROM or the like, into a RAM and executing those programs.

In the initial state of the processing illustrated in FIG. 6, it is assumed that the MFP 100 has established a connection with the AP 101 in wireless infrastructure mode. When the MFP 100 and the AP 101 connect in wireless infrastructure mode, the AP 101 obtains information as to whether the MFP 100 supports IEEE 802.11v. It is assumed that the following processing is then performed when the AP 101 has successfully obtained information indicating that the MFP 100 supports IEEE 802.11v.

In step S601, the AP 101 sends a query (a measurement request) to the MFP 100 regarding the radio wave strength of the APs around the MFP 100. This query is sent, for example, as a beacon frame request or a beacon report request. In other words, a mechanism defined in the IEEE 802.11k standard can be used for this request.

In step S602, in response to the request received in step S601, the MFP 100 receives frames transmitted by the surrounding APs and measures the radio wave strengths thereof. As a result, the radio wave strength of each of the plurality of APs, including the AP 101 and the AP 102, is measured. This processing is called an "AP search".

In step S603, the MFP 100 sends a list of the radio wave strengths of the APs around the MFP 100, measured in step S602, as a response to the request received in step S601. The radio wave strengths provided in the response may be information saved in the RAM 214, the non-volatile memory 215, and the like of the MFP 100, in addition to or instead of the information measured in step S602. This response is sent, for example, as a beacon report or a measurement report.

In step S604, the AP 101 determines whether it is necessary to switch the connection destination of the MFP 100 based on the congestion state in the network, which the AP 101 has ascertained, and the radio wave strengths received from the MFP 100 in step S603. The following are factors that cause the AP 101 to determine that it is necessary to switch the connection.
- Many STAs connected to the AP 101 (at least a threshold)
- High communication volume between the STA connected to the AP 101 and the AP 101 (at least a threshold)
- Presence or absence of interference waves, determined based on an SN ratio or the like
- AP function stopped

In addition, whether it is necessary to switch the connection destination may be determined based on the degree of congestion (number of STA connections, communication volume) for each AP, determined by using communication between APs. When it is determined that it is necessary to switch the connection destination of the MFP 100, and the SSID, the channel, and the frequency band of the other AP designated to be switched to by the MFP 100 are determined, the sequence moves to step S605. Note that in the present embodiment, the Extended Service Set Identifier (ESSID) of another AP designated (recommended) as the switching destination is the same as the ESSID of the switching source AP (the BSSID is different for each AP). However, the switching destination may be recommended to be an AP having a different ESSID from the switching source AP. "BSSID" is an acronym for Basic Service Set Identifier, and is equivalent to the MAC address of the AP (i.e., identification information of the AP).

In step S605, the AP 101 sends an AP change request (a connection destination switching request) to the MFP 100. The connection destination change request includes the BSSID, channel, and frequency band information of the other AP designated as the switching destination by the MFP 100, determined in step S604 (called a "recommended AP" hereinafter). Note that a plurality of BSSIDs may be designated. In other words, a plurality of APs may be recommended for switching destinations as recommended APs. The connection destination change request is sent as a BTM request, for example. In other words, a BSS Transition Management (BTM) Request frame, defined in the IEEE 802.11v standard, is sent. The example illustrated in FIG. 6 assumes that the AP 102 is designated as the switching destination (the recommended AP) included in the connection destination change request.

In step S606, if the connection destination change request received in step S605 is to be complied with, the MFP 100 sends a response indicating approval of the switch to the AP 101. If the connection destination change request is not to be complied with, a switch rejection may be sent as a response. The response is sent as a BTM response. The example in FIG. 6 assumes that a response indicating approval is sent.

In step S607, the AP 101 and the MFP 100 terminate the connection in wireless infrastructure mode.

In step S608, the MFP 100 sends a connection request to the AP 102 so as to connect to the AP 102 designated in the connection destination change request received in step S605.

As a result, in step S609, a connection between the MFP 100 and the AP 102 is established in wireless infrastructure mode.

Using such a mechanism, the MFP 100, which is the STA, can change the connection destination from the AP 101 to the AP 102 based on the connection destination change request from the AP 101 to which the MFP 100 was originally connected (the AP from before the connection destination is changed). The AP 101 and the AP 102 may be APs installed in different locations. In other words, through the processing illustrated in FIG. 6, the MFP 100 can switch to another AP installed in a location different from the AP to which the MFP 100 was originally connected. There are also situations where the AP handles mutually-different frequency bands among a plurality of frequency bands provided by the same device (two or three of the 2.4 GHz band, the 5 GHz band, or the 6 GHz band). In other words, through the processing illustrated in FIG. 6, the MFP 100 can switch to another frequency band provided by the same device as the AP to which the MFP 100 was originally connected. For example, the connection destination can be changed to an AP in the 6 GHz band based on the connection destination change request.

Although the present embodiment describes an example in which the measurement request and a connection destination change request from the AP are sent using a mechanism compliant with Wi-Fi Agile Multiband, and the STA responds thereto, the configuration is not limited thereto. The present embodiment can be applied even if the STA makes a response, changes the connection destination AP (switches, deletes, or adds an AP to serve as a connection destination), or the like in response to a measurement request or a connection destination change request sent from the AP using a different mechanism from that in the example described above.

There are situations where changing the connection destination AP based on a change request for changing the connection destination AP sent from the AP currently connected poses no problems, and situations where doing so is not desirable. In situations where changing the connection destination AP based on a change request is not desirable, one or more of the following types of processing can be combined as processing for suppressing a change in the connection destination in response to the change request. The following processing is processing that prevents or makes it difficult to change the connection destination AP based on a change request.

### (Suppression Processing 1)

Even if the change request described with reference to step S605 is received, the connection destination AP is not changed based on the received connection request, and the change request is not responded to; or, a response indicating that the change request has been rejected (that the connection destination AP will not be changed) is sent to the AP currently connected. When a rejection response is sent, the priority of the connection destination change for another STA connected to the AP currently connected to the MFP 100 is raised and the priority of the connection destination change for the MFP 100 that returned the rejection response is lowered. As a result, the connection with the AP that has been connected can be maintained. If no response is returned (that is, the request is ignored), it is thought that the AP currently connected will maintain the connection with the MFP 100 to wait for a response until a timeout following a response standby time. Accordingly, in a situation where the connection is terminated immediately in accordance with some response to a change request from the MFP 100, the connection with the AP currently connected can be maintained longer by not responding rather than returning some kind of response. Accordingly, for example, based on information indicating the reason for the change included in the change request, the processing can be varied according to the reason, such as rejecting the request if the reason is weak or ignoring the request if the reason is strong. The reason for the change can be determined based on, for example, information included in Request Mode in the BTM Request, indicating which of several reasons is applicable. For example, if the Disassociation Imminent bit or the BSS Termination Included bit of Request Mode is 1, the change request can be determined to be a request in which the reason for the change is strong. Otherwise, the change request can be determined to be a request in which the reason for the change is weak.

### (Suppression Processing 2)

In response to the measurement request described with reference to step S601, information indicating that the radio wave reception conditions (signal reception conditions) of an unconnected AP other than the AP currently connected are different from the actual measured conditions (low signal quality) is provided as a response (a false response). In this case, the response may be made after taking an actual measurement in response to the reception of the measurement request, or the response may be made without actually taking a measurement. Specifically, in the response described with reference to step S603 (a beacon report or the like), a value indicating a lower received signal strength and/or a value indicating higher noise (signal-to-noise ratio) is provided as a response to the signal quality measured for the signal received from the unconnected AP. Alternatively, the response may be a response that does not include at least one piece of information on the unconnected AP. Processing may also be performed in which the response is provided having set the received signal strength to an extremely low value or having set the noise to an extremely high value, based on information measured for the unconnected AP in the past. Even if a measurement request is received, a response indicating a good received signal strength or noise conditions only for the AP currently connected may be provided, without taking an actual measurement (AP search) and without including the information on the unconnected AP. Responding to the measurement request without including the information on the unconnected AP in the response corresponds to content indicating that no other unconnected AP has been found even after performing an AP search. In other words, not including the information on the unconnected AP in the response indicates that the signal quality from the unconnected AP is at least a result different from the result of the AP search actually performed.

By doing so, connection destination change requests being sent from the AP currently connected to other APs can be expected to be suppressed. A change in the connection destination in response to the connection destination change request is therefore suppressed.

### (Suppression Processing 3)

The AP currently connected is temporarily disconnected, information indicating that the change request is not supported is provided, and the same AP is then reconnected. Specifically, the wireless connection with the AP currently connected is temporarily terminated, and data of the Association Request frame, including information indicating that IEEE 802.11v is not supported, is generated as a preparation for reestablishing the wireless connection. Processing for connecting to the AP is then performed using the generated Association Request frame data. As a result, if an Association Request frame including information indicating that IEEE 802. 1 1v is not supported is generated, the AP is connected to as an electronic apparatus that does not support the functions of Agile Multiband. As a result, the AP currently connected recognizes that the MFP 100 does not support IEEE 802. 11v, and does not send a wireless connection destination change request to the MFP 100. As a result, the request to change the wireless connection is no longer made to the MFP 100, and thus the wireless connection between the MFP 100 and the AP currently connected is easier to maintain. In addition, if the AP currently connected recognizes that the MFP 100 does not support IEEE 802. 11v, the transmission of the measurement request (the request described with reference to step S601) from the AP currently connected to the MFP 100 is also stopped. Accordingly, the measurement in response to the measurement request (the AP search) and the response to the measurement request (the processing of step S603) can also be suppressed in the MFP 100. The processing load and power consumption can be reduced by that amount. Resources can also be allocated to other processing.

For example, printing data being received corresponds to a state where it is not desirable to change the connection destination AP based on a change request. The MFP 100 receiving printing data corresponds to a state where some of the printing data of an image to be printed has already been received by the mobile terminal device 104, which is the partner device, but the remainder of the printing data has not yet been received. Upon receiving some printing data equivalent to printing onto a single page, the MFP 100 prints by repeating an operation in which some of the printing data is received and then printed (e.g., one line's worth of printing data is received in printed), after which the next data is received and then printed. If the connection destination AP is changed based on a connection destination change request while the printing data is being received, the processing for switching the connection destination will produce time lag, which may lead to a drop in the print quality, such as by producing unevenness in the printing. Additionally, the quality of communication with the mobile terminal device 104, which is the partner device, may drop after the connection destination is switched, making it impossible to receive the subsequent data and resulting in a printing failure. It is therefore preferable to perform at least one of the processing of the above-described (Suppression Processing 1) or (Suppression Processing 2) as processing for suppressing a change in the connection destination in response to a change request while printing data is being received, or to perform the processing of the above-described (Suppression Processing 3) before starting to receive printing data.

Incidentally, an AP that is a candidate for a connection destination switch in a connection destination change request from a currently-connected AP may include an AP that is not preferred as a connection destination AP for an STA.

For example, it is conceivable that APs that are candidates for a connection destination switch include an AP that has a lower security strength than the security strength of the currently-connected AP. In such a case, if the connection destination AP is switched based on a request to change the connection destination from the currently-connected AP, the security strength of the connection with the AP may drop. It is therefore necessary to devise a way to switch the STA to an appropriate connection destination AP.

Accordingly, in the present embodiment, the MFP 100 connects to an AP based on a security strength mode serving as a standard. Specifically, control is performed to suppress connections to APs using a security mode having a lower security strength than the security mode serving as the standard, among the candidate APs serving as change destination candidates in the change request. Such a configuration makes it possible to switch the STA to an appropriate connection destination AP.

There are also cases where, for example, the APs serving as candidates for the connection destination switch include APs using a security mode not supported by the MFP 100, a security mode restricted according to the settings of the MFP 100, or the like. In such a case, there are situations where when the MFP 100 switches the connection destination AP to the switching candidate AP based on the connection destination change request, the connection with the switching destination AP fails. It is therefore necessary to devise a way to switch the STA to an appropriate connection destination AP.

Accordingly, in the present embodiment, the MFP 100 performs control to suppress processing for changing the connection destination AP for APs, among the candidate APs serving as candidates for the change destination in the change request, that cannot connect using a security mode which the MFP 100 can use.

There are also cases where, for example, the APs that are candidates for connection destination switching include an AP having a different authentication mode from that used before the switch. Specifically, when the authentication mode of the currently-connected AP is a personal mode, an AP in enterprise mode may be included in the recommended APs. Conversely, if the authentication mode of the currently-connected AP is enterprise mode (an authentication mode using an authentication server), an AP having a different authentication mode from enterprise mode, e.g., an AP in personal mode, may be included in the recommended APs. In such a case, there are situations where when the MFP 100 switches the connection destination AP to the switching candidate AP based on the connection destination change request, the security conditions expected by the user cannot be maintained, or the connection with the switching destination AP fails. It is therefore necessary to devise a way to switch the STA to an appropriate connection destination AP. Accordingly, in the present embodiment, control is performed to suppress situations where the connection destination is changed to an AP having a different authentication mode from the currently-connected AP.

Note that the connection destination AP change request received by the MFP 100 from the currently-connected AP may be referred to as a "connection destination change request", a "change request", or the like. Furthermore, in the present specification, the connection destination AP change request can also be referred to as a "request to change the connection destination AP".

### (Processing Based on Request from Currently-Connected AP)

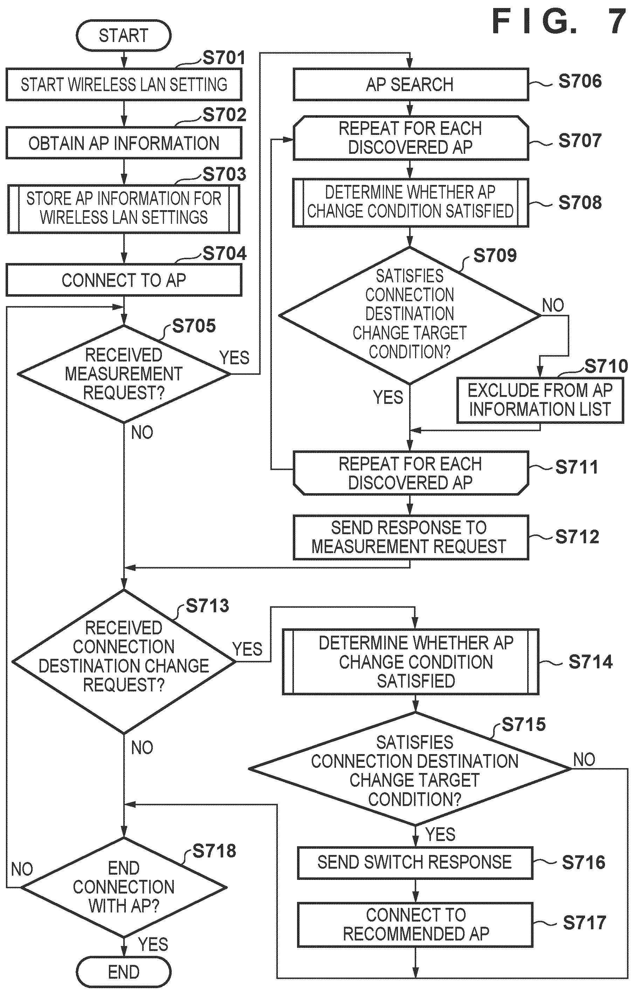

FIG. 7 is a flowchart illustrating an example of processing corresponding to an AP search request, a connection destination change request, and the like, performed by the MFP 100. In this flowchart, the processing performed by the MFP 100 is implemented by the CPU 212 reading out various programs stored in a memory such as the ROM 213 into the RAM 214 and executing those programs.

In step S701, the CPU 212 starts wireless LAN settings. Specifically, the CPU 212 accepts an instruction to start wireless infrastructure mode settings. The instruction to start wireless infrastructure mode settings may be, for example, an instruction based on a user operation made in the wireless LAN settings menu screen illustrated in FIG. 3D. The user operation may be, for example, the user selecting "Wireless LAN Setup" in the wireless LAN settings menu screen. The instruction to start wireless infrastructure mode settings may also be receiving a specific signal from an external device, such as the mobile terminal device 104, for example.

In step S702, the CPU 212 obtains AP information necessary for the wireless infrastructure mode settings. Specifically, for example, the CPU 212 obtains the AP information through an AP search. For example, in step S702, the CPU 212 starts the AP search by sending a device search request (Probe Request). Then, by receiving a wireless signal sent from an AP, such as a device search response (Probe Response), a beacon (information sent actively by the AP at regular intervals), or the like, the CPU 212 searches out and discovers the AP. The AP information obtained from the AP through such an AP search includes at least one of information indicating the SSID, radio wave strength, frequency band, MAC address, authentication mode, encryption mode, and the like of the AP. The content of the AP information varies depending on the AP model, model number, settings, and the like.

For example, if the security mode (authentication mode, encryption mode) used by the AP is not a security mode supported by the MFP 100, the CPU 212 may exclude that AP information from the results of the AP search. The CPU 212 may also exclude such AP information from the results of the AP search even if the security mode used by the AP is only a security mode not supported and/or restricted by the MFP 100.

In step S702, after the AP search is complete, the CPU 212 displays the list of APs found in the AP search in the console unit 220 of the MFP 100. The list of APs is content indicating the results of the AP search. The list of APs is displayed, for example, as an interface capable of accepting selection instructions made by the user. For example, the CPU 212 may display a list of the AP identification information obtained through the AP search in the console unit 220 as the list of APs. The AP identification information may be, for example, an SSID, a device name, or the like. For example, if the AP selected by the user uses a security mode that requires authentication information such as a password, the CPU 212 accepts the input of a password for the AP selected by the user. In this manner, the CPU 212 may obtain the password of the AP selected by the user by accepting the input of the password of the AP by the user. If the security mode of the AP selected by the user does not require a password, the CPU 212 does not accept the input of the password in step S702. The OPEN mode, the EAP mode, or the like, which will be described later, can be given as examples of modes which do not require a password.

Although the present embodiment describes the CPU 212 as displaying the results of the AP search in the console unit 220 of the MFP 100 and accepting the input of the password of the AP selected by the user as an example, the configuration is not limited thereto. For example, the AP information in step S702 may be obtained from the AP using a function called Wi-Fi Protected Setup ("WPS" hereinafter) (registered trademark). Alternatively, the AP information in step S702 may be obtained from an external device such as the mobile terminal device 104 using a function called Wi-Fi Easy Connect ("WEC" hereinafter) (registered trademark). Furthermore, the AP information in step S702, the instruction from the user for selecting the AP, and the like may be obtained by receiving a specific signal from an external device such as the mobile terminal device 104.

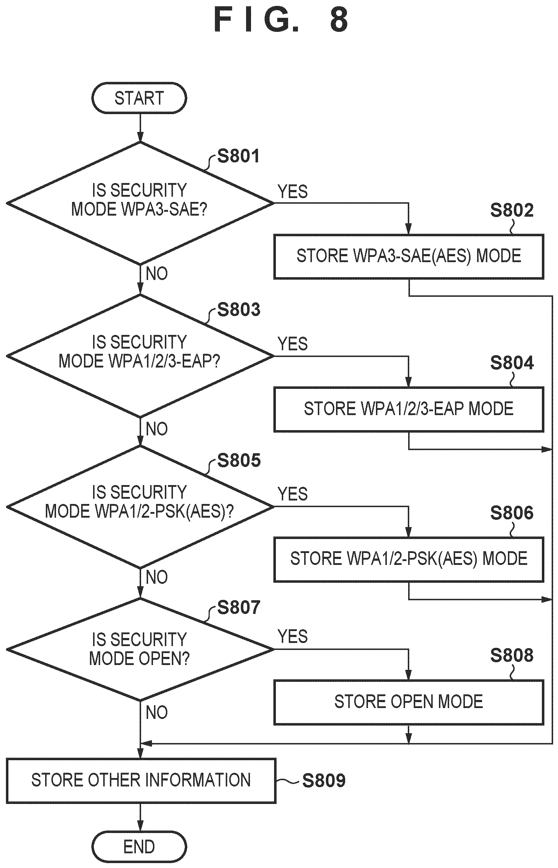

In step S703, based on AP information obtained in step S702, the CPU 212 performs control for recording the AP information necessary for the wireless infrastructure mode settings in the RAM 214 and/or the non-volatile memory 215 (recording control). This processing will be described later in detail with reference to FIG. 8. When storing the AP information in this processing, information indicating the authentication mode and the encryption mode of the AP is also stored therewith as the "security mode". The AP information necessary for the wireless infrastructure mode settings stored in step S703 includes, for example, at least one of the SSID, the password, the security mode (the authentication mode and/or the encryption mode), the frequency band, the channel, the communication standard, certificate information, and a username. The SSID is one or both of the ESSID and the BSSID. This information is stored based on an operation made in the console unit 220 of the MFP 100 by the user, a specific signal received from an external device such as the AP or the mobile terminal device 104, or the like.

In step S704, the CPU 212 performs connection processing for connecting to the AP in accordance with the IEEE 802.11 standard, using the AP information obtained in step S702. The AP connected to in step S704 is the AP for which a selection instruction made by the user has been selected in step S702.

In step S705, the CPU 212 determines whether a measurement request has been received from the currently-connected AP. The sequence moves to step S706 if a measurement request is determined to have been received, and to step S713 if not. Here, the measurement request is the same as the query for the radio wave strength described with reference to step S601 above. In other words, the measurement request is a request for the results of the AP search, and is also a request for measurement results for the radio wave conditions (signal quality) of the APs around the MFP 100.

In step S706, the CPU 212 performs an AP search as described above with reference to steps S602 and S702. The CPU 212 stores the list of AP information found through the AP search in the RAM 214.

The processing of steps S707 to S711 described hereinafter is performed for each of the APs found through the AP search. An AP found through an AP search may be included, in a change request received from the currently-connected AP, as an AP recommended as a connection destination AP. In other words, the AP found through the AP search can also be said to be a candidate AP that is a candidate for the connection destination AP of the MFP 100. The processing of steps S708 and S709 is processing for determining whether the AP found through the AP search is an AP suitable as a candidate for the connection destination of the MFP 100. Meanwhile, the processing of step S710 is processing for suppressing situations where a connection request including a connection destination AP that is not suitable is sent by making a false response, as described in Suppression Processing 2 above, with respect to the information of APs which are not suitable as connection destinations. In other words, the processing of steps S707 to S711 is processing for suppressing connections to APs which are not favorable as connection destinations for the MFP 100. In other words, the processing of steps S707 to S711 can be said to be processing for changing the MFP 100 to a suitable connection destination AP. Note that instead of the AP search performed in step S706, the CPU 212 may perform the processing of steps S707 to S711 using AP information searched out and stored in the past.

In step S707, the CPU 212 starts the loop of the processing of steps S708 to S710 for each of the APs discovered through the AP search performed in step S706.

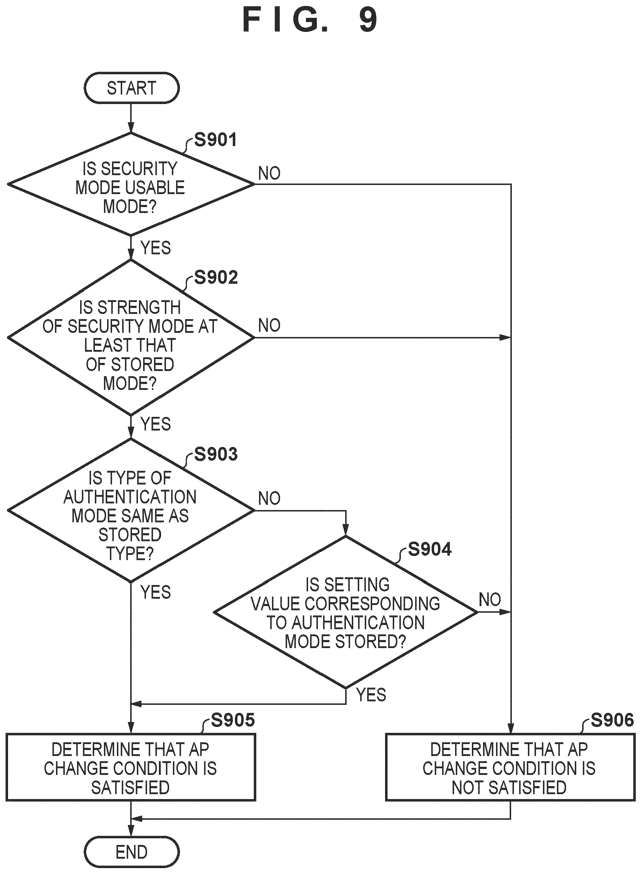

In step S708, the CPU 212 determines whether the AP discovered through the AP search satisfies a predetermined condition, and stores the result of the determination. The predetermined condition is a target condition for determining whether the AP is a favorable AP as a target for the connection destination change. In other words, in step S708, the CPU 212 determines whether the AP found through the AP search is a favorable AP as a target for the connection destination change. This processing will be described later in detail with reference to FIG. 9.

In step S709, the CPU 212 determines whether the AP satisfies a target condition for an AP after the connection destination AP is changed, based on the result of the determination in step S708. The sequence moves to step S711 if the target condition is determined to be satisfied. However, the sequence moves to step S710 if the target condition is determined not to be satisfied. Specifically, the CPU 212 makes a determination based on the information stored in step S905 or step S906 (described later) (a determination result). In other words, the sequence moves to step S711 if the determination is made as indicated in step S905 (described later), and to step S710 if the determination is made as indicated in step S906 (described later).

In step S710, the CPU 212 generates a list having content different from the list of the AP information stored in step S706. For example, the CPU 212 excludes (deletes) the information of APs that do not satisfy the target condition from the list of the AP information. Alternatively, the CPU 212 sets the information of APs that do not satisfy the target condition to information different from the actually-measured conditions, from the list of the AP information stored in step S706. The "different information" is information indicating that the signal quality is lower than the signal quality actually measured in the AP search. This processing is the processing described above in Suppression Processing 2. "Signal quality" refers to the radio wave conditions, and is the radio wave strength or the like.

In this manner, if the AP discovered through the AP search is an AP that does not satisfy the condition for an AP connection destination, the CPU 212 excludes the AP that does not satisfy the condition from the results of the AP search. Alternatively, the CPU 212 sets information different from the actually-measured results for the AP that does not satisfy the condition. This makes it possible to suppress situations where an AP that does not satisfy the target condition is included as a recommended AP in the connection destination change request sent from the AP currently connected to the MFP 100. In other words, situations where the connection destination of the MFP 100 is changed to an AP that does not satisfy the conditions of the security mode can be suppressed.

In step S711, the CPU 212 repeats the processing of steps S708 to S709 or the processing of steps S708 to S710 for the other APs discovered through the AP search performed in step S706. However, if the processing has ended for all of the APs discovered through the AP search performed in step S706, the sequence moves to step S712.

In step S712, the CPU 212 sends, to the currently-connected AP, a response to the measurement request, as described with reference to step S603 of FIG. 6. For example, if the processing of step S710 has been performed, the content is different from the results of the AP search, and thus in step S712, the list of AP information is sent as a false response.

In step S713, the CPU 212 determines whether a connection destination change request has been received from the currently-connected AP. This change request corresponds to that sent by the AP 101 in step S605 of FIG. 6. The CPU 212 moves the sequence to step S714 if a change request is determined to have been received, and to step S718 if not.

In steps S714 to S716, the CPU 212 determines whether the connection destination should be changed to the recommended AP included in the change request, and if such a change is not preferable, performs processing for suppressing the connection destination change in response to the change request. This processing corresponds to the Suppression Processing 1 described above.

In step S714, the CPU 212 determines whether the recommended AP included in the received change request satisfies a predetermined condition. The predetermined condition is a target condition for determining whether the AP is a favorable (suitable) AP as a target for the connection destination change. In other words, in step S714, the CPU 212 determines whether the recommended AP is a favorable AP as a target for the connection destination change. This processing will be described later in detail with reference to FIG. 9.

In step S715, the CPU 212 determines whether the recommended AP included in the change request satisfies a target condition for an AP after the connection destination AP is changed, based on the result of the determination in step S714. If the target condition is satisfied, the sequence moves to step S716, and if not, the sequence moves to step S718. Specifically, the sequence moves to step S716 if the determination is made as indicated in step S905 (described later), and to step S718 if the determination is made as indicated in step S906 (described later).

If the target condition is determined not to be satisfied in step S715 (NO in step S715), the CPU 212 may send a response indicating rejection to the currently-connected AP, without connecting to the recommended AP, as described in Suppression Processing 1 above. An indication of "rejection" is, in other words, and indication that the connection destination AP will not be changed. Additionally, if the target condition is determined not to be satisfied, the CPU 212 may ignore the change request and skip returning a response.

In step S716, the CPU 212 sends, to the currently-connected AP, a response indicating that the received connection destination change request is to be complied with, and moves the sequence to step S717. This processing corresponds to the processing performed in step S606 of FIG. 6.

In step S717, the CPU 212 terminates the connection with the currently-connected AP, and performs processing for connecting to the recommended AP included in the connection destination change request (the recommended AP determined to satisfy the target condition in step S714). This processing corresponds to the processing performed in steps S607 and S608 of FIG. 6.

In this manner, if the recommended AP is an AP that does not satisfy the condition for a connection destination AP, the CPU 212 performs control for sending a response rejecting the change request to the AP currently connected to the MFP 100, control for ignoring the change request, or the like (NO in step S715). This makes it possible to suppress situations where the connection destination AP is changed to an AP, among the recommended APs serving as candidates for APs to be changed to, that uses a security mode not favorable for the MFP 100. On the other hand, if the recommended AP is an AP that meets the conditions for a connection destination AP, a response indicating that the change request is to be complied with is sent, and processing is performed to connect to the recommended AP (YES in step S715, steps S716 and S717). Such control by the CPU 212 makes it possible for the MFP 100 to connect to an appropriate AP.

In step S718, the CPU 212 determines whether to terminate the connection with the currently-connected AP. If it is determined that the connection is to be terminated, the sequence illustrated in FIG. 7 ends. However, if it is determined that the connection is not to be terminated, the sequence moves to step S705. Specifically, for example, the CPU 212 determines whether an instruction to turn the MFP 100 off has been received. The instruction to turn the MFP 100 off may be an instruction based on the console unit 220 or the like of the MFP 100 not being operated for a predetermined time, an instruction based on a power button (not shown) of the MFP 100 being operated, or the like.

Although FIG. 7 illustrates an example in which both the processing of steps S707 to S711 (Suppression Processing 2) and the processing of steps S714 to S716 (Suppression Processing 1) are performed, the configuration is not limited thereto. For example, one of the processing of steps S707 to S711 (Suppression Processing 2) and steps S714 to S716 (Suppression Processing 1) may be performed, and the other may not be performed.

### Processing for Storing Security Mode Used when Connecting to AP

FIG. 8 is a flowchart illustrating an example of processing for storing information indicating the authentication mode and the encryption mode of an AP collectively, as a security mode to be used when connecting to the AP, when setting the wireless infrastructure mode for the MFP 100. In this flowchart, the processing performed by the MFP 100 is implemented by the CPU 212 reading out various programs stored in a memory such as the ROM 213 into the RAM 214 and executing those programs. This processing is executed in step S703 based on the AP information having been obtained in step S702.

The security modes will be described here. The following security modes have been used for wireless communication using wireless LAN based on the IEEE 802.11 series standard.

### Authentication Mode

The following are examples of types of authentication modes supported by the wireless AP.
(1) PSK mode using Pre-Shared Key
(2) SAE mode using Simultaneous Authentication of Equals (SAE)
(3) EAP mode that authenticates communication devices that connect to the network using an authentication server that supports IEEE 802.1X/EAP

Of these, (1) the security mode using a PSK includes the following modes, for example.
(1-1) WPA (Wi-Fi Protected Access) - PSK
(1-2) WPA2-PSK

The PSK mode is a personal mode, and the authentication mode (type of authentication, system of authentication, type of security) is different from the enterprise mode.

Additionally, (2) the security mode using SAE includes the following modes, for example.
(2-1) WPA3-SAE

Additionally, (3) the security mode using an authentication server includes the following modes, for example.
(3-1) WPA-EAP
(3-2) WPA2-EAP
(3-3) WPA3-EAP

The security mode using an authentication server is an authentication mode in enterprise mode, and the authentication mode (type of authentication, system of authentication, type of security) is different from the personal mode.

### Encryption Mode

The encryption modes include the following modes, for example.
- CCMP (Counter mode with CBC-MAC Protocol) using AES (Advanced Encryption Standard)
- Temporal Key Integrity Protocol (TKIP) using RC4
- WEP

Note that "EAP" in the present specification stands for "Extensible Authentication Protocol". "WEP" stands for "Wired Equivalent Privacy".

Of the above-mentioned security modes (authentication modes and encryption modes), (2-1), WPA3-SAE, and (3-1) - (3-3), WPA/WPA2/WPA3-EAP, are relatively secure security modes, for example. The next modes in terms of security are (1-1) and (1-2), WPA/WPA2-PSK. WEP is a relatively insecure security mode. OPEN (no authentication) is a mode providing no security. Regarding the encryption mode, the mode using AES is a relatively secure mode, TKIP is a relatively insecure mode, and no encryption is a mode providing no security.

The security modes supported by the MFP 100 vary depending on the model, model number, settings, and the like of the MFP 100. The security modes supported by the MFP 100 according to the present embodiment are assumed to be WPA-PSK, WPA2-PSK, WPA3-SAE, WPA-EAP, WPA2-EAP, WPA3-EAP, and OPEN (no authentication and no encryption). Security modes not supported by the MFP 100 are assumed to be, for example, modes that use TKIP or WEP for encryption.

In step S801, the CPU 212 determines whether the authentication mode used to connect to the AP is the WPA3-SAE method. For example, the CPU 212 determines the authentication mode used by the AP for which the selection instruction made by the user was accepted based on the AP information obtained in step S702. If the mode is determined to be WPA3-SAE, the sequence moves to step S802. However, if the mode is not determined to be WPA3-SAE, the sequence moves to step S803.

In step S802, the CPU 212 stores a relatively secure mode (WPA3-SAE) as the security mode in the RAM 214 and/or the non-volatile memory 215.

In step S803, the CPU 212 determines whether the authentication mode used to connect to the AP is at least one of WPA-EAP, WPA2-EAP, and WPA3-EAP. For example, the CPU 212 determines the authentication mode used by the AP for which the selection instruction made by the user was accepted based on the AP information obtained in step S702. If the authentication mode used to connect to the AP is determined to be at least one of WPA-EAP, WPA2-EAP, and WPA3-EAP, the sequence moves to step S804. On the other hand, if the authentication mode used to connect to the AP is determined to be neither WPA-EAP, WPA2-EAP, nor WPA3-EAP, the sequence moves to step S805.

In step S804, the CPU 212 stores a "relatively secure mode (WPA/WPA2/WPA3-EAP)" as the security mode in the RAM 214 and/or the non-volatile memory 215.

In step S805, the CPU 212 determines whether the authentication mode used to connect to the AP is at least one of WPA-PSK and WPA2-PSK. For example, the CPU 212 determines the authentication mode used by the AP for which the selection instruction made by the user was accepted based on the AP information obtained in step S702. If the mode is determined to be at least one of WPA-PSK and WPA2-PSK, the sequence moves to step S806. On the other hand, if it is determined that neither the WPA-PSK method nor the WPA2-PSK method is used, the process moves to S807.

In step S806, the CPU 212 stores a "mid-level security mode (WPA/WPA2-PSK)" as the security mode in the RAM 214 and/or the non-volatile memory 215.

In step S807, the CPU 212 determines whether the authentication mode used to connect to the AP is OPEN (no encryption). For example, the CPU 212 determines the authentication mode used by the AP for which the selection instruction made by the user was accepted based on the AP information obtained in step S702. If the CPU 212 determines that the mode is the OPEN mode, the sequence moves to step S808. However, if the CPU 212 determines that the mode is not the OPEN mode, the sequence moves to step S809.

In step S808, the CPU 212 stores an "insecure mode (the OPEN mode)" as the security mode in the RAM 214 and/or the non-volatile memory 215.

In step S809, the CPU 212 records other settings information (setting details) of the wireless infrastructure mode in the RAM 214 and/or the non-volatile memory 215. The settings information is, for example, AP information necessary for the wireless infrastructure mode settings. In this processing, the security mode is stored together with the type of the authentication mode of the AP. As a result, if the strength of the security mode of the recommended AP is the same as the strength of the security mode of the MFP 100, the same AP can be connected to using the settings such as the ESSID, the password, and the like.

Note that the security mode used by the MFP 100 for connecting to the AP may be restricted by the user operating the console unit 220 of the MFP 100, receiving a specific signal from an external device such as the mobile terminal device 104, or the like.

FIG. 9 is a flowchart illustrating an example of processing for determining whether an AP for determination satisfies a predetermined condition as a connection destination AP. In other words, FIG. 9 illustrates an example of processing for determining whether an AP for determination is an AP that is suitable as an AP after the connection destination is changed. In this flowchart, the processing performed by the MFP 100 is implemented by the CPU 212 reading out various programs stored in a memory such as the ROM 213 into the RAM 214 and executing those programs.

Note that the processing of FIG. 9 is executed in steps S708 and S714 of FIG. 7. In other words, this processing is executed for an AP discovered through the AP search based on the measurement request, the recommended AP included in the change request, and the like. That is, the processing is executed when determining whether the connection destination AP is to be changed.

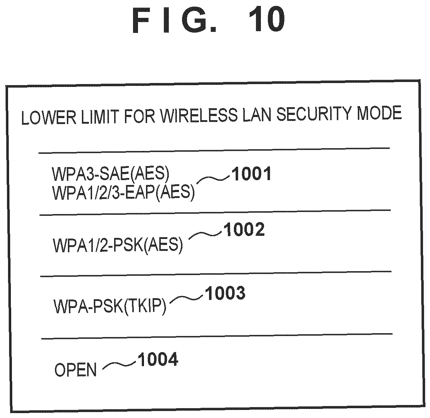

In step S901, the CPU 212 determines whether the security mode of the AP for which the determination is to be made and which is a candidate for the connection destination switch ("candidate AP", hereinafter), is a mode that can be used by the MFP 100. If the mode is determined to be a usable mode, the sequence moves to step S902. However, if the mode is determined not to be a usable mode, the sequence moves to step S906. Specifically, for example, the CPU 212 determines that the security mode used on the network formed by the candidate AP is a usable mode if the mode is supported by the MFP 100 and is not restricted from being used by the MFP 100. The CPU 212 also determines that the security mode used by the candidate AP is not a usable mode if the method is at least one of a mode not supported by the MFP 100 and a mode that is restricted from being used by the MFP 100. The security modes supported by the MFP 100 vary depending on the model, model number, settings, and the like of the MFP 100, as mentioned earlier. Additionally, the security modes that the MFP 100 supports are stored in the non-volatile memory 215 in advance, for example. Additionally, the security modes that can be used by the MFP 100 may be restricted by settings based on user operations, as will be described later with reference to FIG. 10, for example.

In this manner, step S901 is processed as a determination of "NO" when, in addition to the condition of whether the MFP 100 is supported, the use is restricted due to settings or the like even if the MFP 100 is supported. Through this, when the MFP 100 receives a change request from the currently-connected AP, a situation where the connection destination AP is changed can be suppressed if the security mode of the candidate AP is not a method usable by the MFP 100.

Although the present embodiment describes an example in which the determination in step S901 is made on the basis of whether the MFP 100 supports the mode and furthermore whether the usage of the mode is restricted in the MFP 100, the determination is not limited thereto. For example, in step S901, the CPU 212 may determine whether the MFP 100 supports the mode without determining whether use is restricted by the MFP 100. For example, the CPU 212 may move the sequence to step S902 if it is determined that the security mode of the AP subject to determination is a mode supported by the MFP, and to step S906 if not.

In step S902, the CPU 212 determines whether the security strength of the security mode of the candidate AP is at least the strength of the security mode stored in step S703 of FIG. 7 (see FIG. 8). If the strength is determined to be at least the strength of the stored security mode, the sequence moves to step S903. However, the sequence moves to step S906 otherwise.

A specific example of step S902 will be described. For example, if "WPA1/2-PSK" is stored as the security mode in step S703 of FIG. 7 and the strength of the security mode of the candidate AP is "WPA3-SAE" or "WPA1/2-PSK", the CPU 212 moves the sequence to step S903. If "WPA1/2-PSK" is stored in step S703 and the strength of the security mode of the candidate AP is "OPEN", the CPU 212 moves the sequence to step S906. If "WPA3-SAE" is recorded in step S703 and the strength of the security mode of the candidate AP is "WPA3-SAE", the CPU 212 moves the sequence to step S903. If "WPA3-SAE" is recorded in step S703 and the strength of the security mode of the candidate AP is "WPA1/2-PSK", the CPU 212 moves the sequence to step S906.

In this manner, if the candidate AP is an AP that uses a security mode having a lower security mode strength than the security mode of the currently-connected AP, that AP is determined not to satisfy the condition for a connection destination AP. This makes it possible to suppress situations where, when the MFP 100 receives a change request from the currently-connected AP, the connection destination AP is changed to an AP having a lower security strength than the currently-connected AP. On the other hand, if the candidate AP is an AP using a security mode at least equal to the security mode of the currently-connected AP, that AP is determined to satisfy the condition for a connection destination AP.

In step S903, the CPU 212 determines whether the type of the authentication mode of the candidate AP (e.g., PSK, SAE, EAP, or OPEN) is the same as the type of authentication mode that is stored. The CPU 212 moves the sequence to step S905 if the authentication mode is the same type, and moves the sequence to step S904 if not.

For example, assume that the security mode stored in the processing of FIG. 8 (the security mode set when the wireless infrastructure mode is set) is the stated (1-1) WPA-PSK or (1-2) WPA2-PSK. In this case, if the security mode of the candidate AP is (1-1) WPA-PSK or (1-2) WPA2-PSK, the type of authentication mode is the same, namely PSK, and thus a determination of YES is made in step S903. In other words, if, for example, the security mode stored in the processing of FIG. 8 is the stated (1-1) WPA-PSK, and the security mode of the candidate AP is (1-2) WPA2-PSK, a determination of YES is made in step S903.

Meanwhile, assume, for example, that the security mode stored in FIG. 8 is the stated (1-1) WPA-PSK or (1-2) WPA2-PSK. In this case, if the security mode of the candidate AP is (2-1) WPA3-SAE, the authentication mode types are PSK and SAE, and thus a determination of NO is made in step S903. Likewise, if, for example, the mode stored in the processing of FIG. 8 is the stated (1-1) WPA-PSK or (1-2) WPA2-PSK, and the mode of the candidate AP is (3-1) WPA-EAP or (3-2) WPA2-EAP, a determination of NO is made in step S903. If the security mode stored in the processing of FIG. 8 corresponds to one of the personal mode and the enterprise mode, and the type of the security mode of the candidate AP corresponds to the other of the personal mode and the enterprise mode, the types of the authentication modes are different.

In step S904, the CPU 212 determines whether a setting value corresponding to the authentication mode of the candidate AP (e.g., SAE, PSK, EAP, or OPEN) is recorded. If the value is determined not to be stored, the sequence moves to step S905. However, if the value is determined to be stored, the sequence moves to step S906.

The setting values corresponding to the authentication mode will be described next. The setting value required for SAE is, for example, a password. The setting value required for PSK is, for example, a password and a PSK (pre-shared key). The setting value required for EAP is, for example, a username, a login name, a certificate, and the like. EAP is an enterprise mode. In other words, the setting value is information necessary when the MFP 100 connects to the AP, according to the type of the authentication mode. The setting value corresponding to the authentication mode is stored in the processing of step S703, for example. The setting value is stored in step S809 of FIG. 8, which is executed as the processing of step S703, for example. In this manner, even if the type of the authentication mode used by the MFP 100 with the currently-connected AP is different from the type of the authentication mode of the candidate AP, the AP to which the connection destination is to be changed is assumed to satisfy the target condition if information required for making a connection using different types of modes is obtained, despite the types being different.

For example, if the security mode of the currently-connected AP is "WPA1/2-PSK" but the security mode of the candidate AP is "WPA1/2-EAP", the types of the authentication modes are determined to be different in step S903. Meanwhile, if it is determined in step S904 that an EAP setting value (a username, a login name, a certificate, or the like required for EAP authentication) is stored, that candidate AP is not excluded from being a target for the connection destination change. In other words, changing the connection destination based on a change request for that candidate AP is not suppressed.

Although the present embodiment has described an example in which the sequence moves to step S904 when a determination of NO is made in step S903, the configuration is not limited thereto. For example, when a determination of NO is made in step S903, the processing of step S904 may be skipped, and the sequence may move to step S905. In other words, when the type of the authentication mode of the currently-connected AP and the type of the authentication mode of the candidate AP are different, the CPU 212 may uniformly determine that the target condition is not satisfied.

In step S905, the CPU 212 determines that the AP is eligible for the connection destination change based on the change request. In other words, the candidate AP is determined to satisfy the target condition for a post-connection destination change AP. The CPU 212 stores the result of that determination in the RAM 214 and/or the non-volatile memory 215.

In step S906, the CPU 212 determines that the AP is not eligible for the connection destination change based on the change request. In other words, the candidate AP is determined not to satisfy the target condition for a post-connection destination change AP. The CPU 212 stores the result of that determination in the RAM 214 and/or the non-volatile memory 215.

Settings Screen for Restricting Security Mode Used When Connecting to AP

FIG. 10 is an example of a settings screen for restricting the security mode used when the MFP 100 connects to an AP in wireless infrastructure mode. The CPU 212 displays the settings screen illustrated in FIG. 10 in the console unit 220 upon "Wireless LAN Advanced Settings" being selected in the screen illustrated in FIG. 3D, for example. Although the settings screen being displayed in the console unit 220 of the MFP 100 is described as an example, the configuration is not limited thereto. The settings screen illustrated in FIG. 10 may be displayed in, for example, an external device such as the mobile terminal device 104, by an application, a web browser, or the like capable of making settings in the MFP 100.

Setting items (options) 1001 to 1004 for security modes used when connecting to an AP in wireless infrastructure mode are displayed in the settings screen. The setting items 1001 to 1004 may be displayed as an interface capable of accepting an instruction to set a lower limit for the security mode, for example. In other words, the settings screen is a screen in which a lower limit can be set for the security mode used by the MFP 100 when connecting to an AP. The settings screen can also be called a screen in which a security mode that can be used when the MFP 100 connects to an AP can be set. In other words, the settings screen can be called a "security settings screen". The "lower limit" for the security mode is, in other words, a standard used for the security mode when the MFP 100 connects to an AP. Setting a standard for the security mode in the settings screen in this manner makes it possible to suppress situations where the connection destination for the MFP 100 is changed to an AP that uses a security mode which does not satisfy the standard.

A relatively secure security mode is displayed in the setting item 1001. For example, WPA3-SAE (AES) and WPA1/2/3-EAP (AES) are relatively secure modes.

A mid-level security mode is displayed in the setting item 1002. For example, WPA1/2-PSK(AES) is a mid-level security mode.

A relatively insecure security mode is displayed in the setting item 1003. For example, WPA-PSK(TKIP) is a relatively insecure mode.

An insecure security mode is displayed in the setting item 1004. For example, a mode that does not require authentication when connecting to an AP is an insecure mode. The OPEN mode is a mode that does not require authentication, for example.

When one of the security mode setting items 1001 to 1004 is selected in the settings screen through a user operation, the CPU 212 stores the security mode corresponding to the selected setting item in the RAM 214 and/or the non-volatile memory 215. In other words, the security mode corresponding to the setting item selected by the user is set as the lower limit for the security mode used when the MFP 100 connects to an AP. As a result, when connecting to an AP in wireless infrastructure mode, the MFP 100 is restricted from connecting to APs in modes that are less secure than the security mode selected by the user. This makes it possible to suppress situations where the MFP 100 connects to an AP in a security mode not intended by the user.

Specifically, if, for example, the setting item 1001 is selected, the security mode corresponding to the setting item 1001 can be used when the MFP 100 connects to an AP in wireless infrastructure mode. On the other hand, the security modes corresponding to the setting items 1002 to 1004 are restricted from being used. Meanwhile, if, for example, the setting item 1002 is selected, the security modes corresponding to the setting items 1001 and 1002 can be used when the MFP 100 connects to an AP in wireless infrastructure mode. On the other hand, the security modes corresponding to the setting items 1003 and 1004 are restricted from being used.

The security mode setting items 1001 to 1004 selected by the user in the settings screen may be used in the determination as to whether to change the connection destination AP based on the change request made in steps S708 and S714 (step S902 of FIG. 9), to restrict the security mode used when connecting to the AP.

If, in step S702, step S706, or the like of FIG. 7, the security modes used by the APs obtained through the AP search are only modes which are restricted in the settings screen, those modes may be excluded from the results of the AP search to restrict the security modes used when connecting to an AP.

Meanwhile, of the setting items 1001 to 1004, items having higher security strengths may be displayed preferentially in the settings screen, for example. For example, in the settings screen, items having higher security strengths may be displayed at higher positions, or may be highlighted.

Although the present embodiment describes an example in which the security modes corresponding to the setting items 1000 to 1004 selected by the user through the console unit 220 of the MFP 100 are stored, the configuration is not limited thereto. For example, if the settings screen illustrated in FIG. 10 is displayed in an external device such as the mobile terminal device 104 as described above, the security mode settings may be stored based on a specific signal sent from the external device.

As described thus far, according to the processing of step S902 of FIG. 9, which is performed in step S708 of the present embodiment, the MFP 100 performs an AP search when a measurement request is received from the currently-connected AP. The MFP 100 then performs control such that, as per Suppression Processing 2 described above, a false response is provided in the beacon report (the response to the measurement request) for the information on APs, among the APs discovered through the AP search, that have a lower security strength than the security strength of the currently-connected AP. This suppresses situations where a change request requesting the connection destination to be changed to an AP having a lower security mode is sent from the currently-connected AP.

Additionally, according to the processing of step S902 of FIG. 9, performed in step S714 of the present embodiment, when a connection destination AP change request is received from the currently-connected AP, the MFP 100 performs control based on the strength of the security mode of the recommended AP. If the recommended AP is an AP that uses a security mode for which the security strength is lower than the security strength of the currently-connected AP, the MFP 100 performs control such that the connection destination AP is not changed to the recommended AP, as per Suppression Processing 1. In other words, the MFP 100 does not change the connection destination to the recommended AP, and does not respond to the change request or makes a response indicating that the connection destination AP will not be changed. This suppresses situations where the security strength of the connection with the AP drops due to the connection destination being changed based on the connection destination change request. In other words, it is possible to make it easier to connect to an AP having a better communication environment, while maintaining a secure connection with the AP.

According to the processing of step S901 of FIG. 9, performed in step S708 of the present embodiment, the MFP 100 performs the following control when the APs discovered as a result of an AP search include an AP not supported by the MFP 100 or an AP for which use is restricted. Control is performed such that the information of an AP not supported by the MFP 100 or an AP for which use is restricted is provided as a false response in the beacon report (response to the measurement request), as per the above-described Suppression Processing 2. This suppresses situations in which a change request which changes the connection destination to an AP using a security mode not supported by the MFP 100, an AP using a security mode restricted by the MFP, or the like is sent.

In addition, according to the processing of step S901 of FIG. 9, performed in step S714 of the present embodiment, the MFP 100 performs the following control when a connection destination AP change request is received. If the security mode of the recommended AP is a security mode not supported by the MFP 100 or a security mode for which use is restricted, control is performed such that the connection destination is not changed to the recommended AP, as per Suppression Processing 1. In other words, the MFP 100 does not respond to the change request or makes a response indicating that the connection destination AP will not be changed. This makes it possible to suppress the occurrence of situations where the MFP 100 attempts to change the connection destination based on the connection destination change request and terminates the connection with the currently-connected AP, but cannot connect to the recommended AP (the connection with the recommended AP fails).

Assume that the MFP 100 does not perform the processing of step S901 as in the present embodiment, and instead terminates the connection with the currently-connected AP in accordance with the connection destination change request, and attempts to connect to a recommended AP using a security mode not supported by the MFP 100 or a security mode for which use is restricted. If the MFP 100 fails to connect to the recommended AP, problems such as the following will arise.

The first problem is that the AP from before the switch is disconnected, resulting in a period in which the MFP 100 cannot communicate with an AP. Furthermore, processing time for connecting to the recommended AP, and processing time for connecting to another AP after the connection with the recommended AP fails, are required. This prolongs the period for which communication is not possible. Stable communication is hindered as a result. The second problem is that if, based on a connection destination AP change request, the MFP 100 terminates the connection with the AP from before the switch and does not store the information necessary for connecting to the pre-switch AP, it will not be possible to reconnect to the pre-switch AP. The information necessary for connecting is connection information including at least one of the SSID and the password, other settings information, and the like. To prevent such problems from arising, in the present embodiment, more stable communication can be performed while reducing unnecessary disconnections from APs while also performing control to connect to APs having better communication environments based on change requests.

According to the processing of step S903 of FIG. 9, which is performed in step S708 of the present embodiment, the MFP 100 performs an AP search when a measurement request is received from the currently-connected AP. The MFP 100 then makes a false response in the beacon report (the response to the measurement request) with respect to the information on APs, among the APs discovered through the AP search, of a different type of security mode from the type of the security mode of the currently-connected AP, as per Suppression Processing 2 described above. This suppresses situations where a change request requesting the connection destination to be changed to an AP having a different type of security mode is sent.

Additionally, according to the processing of step S903 of FIG. 9, performed in step S714 of the present embodiment, when a connection destination AP change request is received from the currently-connected AP, the MFP 100 performs control based on the type of the authentication mode of the recommended AP. If the type of the authentication mode of the recommended AP is different from the authentication mode of the currently-connected AP, the MFP 100 performs control such that the connection destination is not changed to that recommended AP, as per Suppression Processing 1. In other words, the MFP 100 does not respond to the change request for the currently-connected AP, or makes a response indicating that the connection destination AP will not be changed. Through this, it is possible to make it easier to connect to an AP having a better communication environment, while keeping the same type of authentication mode for connecting to the AP as that used in the wireless infrastructure mode settings. In other words, it is possible to make it easier to connect to an AP having a better communication environment based on a change request, while suppressing problems such as the security dropping, or the security becoming too strong, due to the type of the authentication mode with the AP being changed unintentionally.

Additionally, by performing the processing of step S904 of the present embodiment, if a setting value corresponding to the type of the authentication mode of the recommended AP is stored, the connection destination AP is changed based on the change request, even if the type of the authentication mode is different. Through this, it is possible to make it easier to connect to an AP having a better communication environment, while maintaining the connection with the currently-connected AP as long as possible.

Although a method has been described in which the security mode of the candidate AP and the security mode of the AP stored when wireless infrastructure mode is set and started (step S703 in FIG. 7) are compared in the determination of step S902, the configuration is not limited thereto. For example, the security mode may be compared to a security mode determined in advance. Specifically, the security mode may be compared to the security mode stored as a result of the user operating the console unit 220 of the MFP 100 as described with reference to FIG. 10. The security mode may also be compared to a security mode stored in response to receiving a specific signal from an external device such as the mobile terminal device 104. Additionally, if the security mode is compared to a security mode specified in advance in the processing of step S902, the security mode may be specifically compared to a usable security mode stored in one or more of the ROM 213, the RAM 214, and the non-volatile memory 215 of the MFP 100.

Additionally, although a method has been described for determining whether the security mode of the candidate AP is supported by the MFP 100 or is restricted in the determination of step S901, the configuration is not limited thereto. In the determination of step S901, the CPU 212 may determine whether the MFP 100 and the candidate AP can be connected based on the information obtained from the candidate AP and capability information of the MFP 100. For example, the determination may be made based on at least one of the security mode (the authentication mode and/or the encryption mode), the frequency band, the channel, and the communication standard.

According to the present embodiment described thus far, more suitable control can be performed in response to a request to change a connection destination received from an AP. In other words, the MFP 100, which is an STA, can be switched to an appropriate AP.

The above-described various types of control performed by the CPU 212 may be performed by a single piece of hardware, or the control of the apparatus as a whole may be carried out by dividing the processing up among multiple pieces of hardware (e.g., multiple processors or circuits).

Although the foregoing has described preferred embodiments of the present invention, the present invention is not intended to be limited to the specific embodiments, and all variations that do not depart from the essential spirit of the invention are intended to be included in the scope of the present invention. Furthermore, the above-described embodiments are merely embodiments of the present invention, and different embodiments can be combined as appropriate.

Additionally, although the foregoing embodiment describes a case where the present invention is applied in an MFP as an example, the present invention is not limited to this example, and can be applied in any wireless device that functions as an STA capable of performing processing in response to a request to change a connection destination from an AP. In other words, the present invention can be applied in personal computers, PDAs, tablet terminals, mobile telephone terminals such as smartphones, music players, game consoles, e-book readers, smart watches, various measurement devices (sensor devices) such as thermometers and hygrometers, and the like. The present invention can also be applied in digital cameras (including still cameras, video cameras, network cameras, and security cameras), printers, scanners, and drones. The present invention can also be applied in video output devices, audio output devices (e.g., smart speakers), streaming media players, wireless LAN client devices (adapters) to which USB terminals, LAN cable terminals, or the like can be connected, and the like. Video output devices include, for example, a device such as a set-top box, which obtains (downloads) a moving image or still image on the Internet, specified by a URL provided by an electronic apparatus, and outputs the moving image or still image to a display device connected through a video output terminal such as an HDMI (registered trademark) terminal. Through this, streaming playback, a mirrored display (a display in which content displayed in an electronic apparatus is also displayed in a display device), or the like is implemented in a display device. The video output device also includes a media player such as a television, a hard disk recorder, a Blu-ray recorder, a DVD recorder, or the like, as well as a head-mounted display, a projector, a television, a display device (monitor), a signage device, or the like. The present invention can also be applied in a device capable of connecting through Wi-Fi, or what is known as a "smart home appliance", such as an air conditioner, a refrigerator, a washing machine, a vacuum cleaner, an oven, a microwave oven, a lighting fixture, a heating appliance, a cooling appliance, or the like.

### Other Embodiments

Embodiment(s) of the present invention can also be realized by a computer of a system or apparatus that reads out and executes computer executable instructions (e.g., one or more programs) recorded on a storage medium (which may also be referred to more fully as a `non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An electronic apparatus (100), comprising:
a connection means configured to connect to a first access point (AP) based on a first security mode;
a changing means configured to change an AP serving as a connection destination based on a change request of an AP serving as a connection destination, the change request being received from an AP that is currently connected; and
a control means configured to perform control to suppress a situation where an AP, among candidate APs serving as candidates to be changed to by the changing means, that uses a security mode having a weaker security strength than the first security mode, is connected due to a change in the AP serving as a connection destination made by the changing means.

2. The electronic apparatus (100) according to claim 1,
wherein the control means performs control to suppress a situation where an AP, among the candidate APs, that uses a security mode having a weaker security strength than the first security mode is disconnected from the first AP currently connected as a post-change connection destination.

3. The electronic apparatus (100) according to claim 1 or 2, further comprising:
a receiving means configured to receive a measurement request, sent from the first AP, requesting a measurement result of measuring a signal quality of an AP in a vicinity of the electronic apparatus (100);
a measuring means configured to measure the signal quality of the AP in the vicinity when the measurement request is received; and
a sending means configured to send a response based on the measurement result by the measuring means to the first AP,
wherein when the measurement result from the measuring means includes a signal quality of a second AP that uses a security mode having a weaker security strength than the first AP, the control means controls the sending means to send the response as content having a signal quality lower than the signal quality of the second AP or as content not including the signal quality of the second AP.

4. The electronic apparatus (100) according to any one of claims 1 to 3,
wherein when a recommended AP that is one of the candidate APs and that is recommended to be changed to in the change request is a third AP that uses a security mode having a security strength equal to or stronger than the first security mode, the control means controls the changing means to change the connection destination such that the third AP is the connection destination after the change, and
when the recommended AP is a second AP that uses a security mode having a weaker security strength than the first security mode, the control means controls the changing means not to change the connection destination such that the second AP is the connection destination after the change.

5. The electronic apparatus (100) according to claim 4,
wherein when the recommended AP is the second AP, the control means controls the changing means not to change the AP serving as the connection destination, and performs control to send, to the first AP as a response to the change request, a response indicating rejection of the change in the connection destination based on the change request.

6. The electronic apparatus (100) according to claim 4,
wherein when the recommended AP is the second AP, the control means controls the changing means not to change the AP serving as the connection destination, and performs control to not send a response to the change request to the first AP.

7. The electronic apparatus (100) according to any one of claims 1 to 6, further comprising:
a recording control means configured to perform control to record a security mode used in a connection with the first AP,
wherein the control means controls a change in the connection destination, based on the change request, in accordance with the security mode used in the connection with the first AP, recorded by the recording control means.

8. The electronic apparatus (100) according to claim 7,
wherein the security mode recorded by the recording control means is information identifying at least one of an authentication mode and an encryption mode.

9. The electronic apparatus (100) according to any one of claims 1 to 8, further comprising:
a setting means configured to set a security mode that can be used in a connection with an AP,
wherein the first security mode is a security mode based on the security mode set by the setting means.

10. The electronic apparatus (100) according to any one of claims 1 to 9,
wherein the control means further performs control to suppress a situation where the changing means changes the AP serving as the connection destination such that an AP communicated with using a security mode not supported by the electronic apparatus (100) or a security mode for which use is restricted by the electronic apparatus (100) is the connection destination after the change.

11. The electronic apparatus (100) according to claim 1,
wherein the control means further performs control to suppress a situation where the changing means changes the AP serving as the connection destination such that an AP connected using a second authentication mode of a different type from a first authentication mode used to connect to the first AP is the connection destination after the change.

12. The electronic apparatus (100) according to claim 1,
wherein the first security mode is at least one of a first mode, a second mode having a weaker security strength than the first mode, a third mode having a weaker security strength than the second mode, and a fourth mode having a weaker security strength than the third mode.

13. The electronic apparatus (100) according to claim 12,
wherein the first mode is at least one of a mode using Simultaneous Authentication of Equals (SAE), a mode using an authentication server compliant with IEEE 802.1X/Extensible Authentication Protocol (EAP), and a mode using Advanced Encryption Standard (AES).

14. The electronic apparatus (100) according to claim 12 or 13,
wherein the second mode is a mode using a Pre Shared Key (PSK).

15. The electronic apparatus (100) according to any one of claims 12 to 14,
wherein the third mode is a mode using Temporal Key Integrity Protocol (TKIP).

16. The electronic apparatus (100) according to any one of claims 12 to 15,
wherein the fourth mode is an OPEN mode that does not require authentication and encryption.

17. The electronic apparatus (100) according to any one of claims 1 to 16,
wherein the electronic apparatus (100) can perform at least one of following: connect to APs and perform processing in accordance with an IEEE 802.1 1ax standard; perform at least one of Orthogonal Frequency-Division Multiple Access (OFDMA)-compliant processing and Target Wake Time (TWT)-compliant processing; and change the connection destination to an AP in a 6 GHz band by changing the AP serving as the connection destination based on the change request.

18. The electronic apparatus (100) according to any one of claims 1 to 17, further comprising:
a printing means configured to be capable of executing printing processing based on printing data received via an AP.

19. The electronic apparatus (100) according to any one of claims 1 to 18,
wherein the control means performs the control such that the suppression is performed based on the security strengths of the candidate APs.

20. A method for controlling an electronic apparatus (100), the method comprising:
connecting to a first access point (AP) based on a first security mode;
changing an AP serving as a connection destination based on a change request of an AP serving as a connection destination, the change request being received from an AP that is currently connected; and
performing control to suppress a situation where an AP, among candidate APs serving as candidates to be changed to in the changing, that uses a security mode having a weaker security strength than the first security mode, is connected due to a change in the AP serving as a connection destination made in the changing.

21. A program which when loaded into a computer and executed allows the computer to function as the electronic apparatus (100) as claimed in any one of claims 1 to 19.

22. A computer-readable storage medium storing a program which when loaded into a computer and executed allows the computer to function as the electronic apparatus (100) as claimed in any one of claims 1 to 19.
